# EUROPEAN PATENT SPECIFICATION

(11) **EP 2 416 203 B1**
(45) Date of publication and mention of the grant of the patent: **13.09.2023**
(21) Application number: 10758775.0
(22) Date of filing: 31.03.2010
(51) Int. Cl.: G02C 7/10, C09K 9/02, G02B 1/10, G02B 5/23, G02C 13/00, B29D 11/00

(54) **PHOTOCHROMIC LENS MANUFACTURING SYSTEM, PHOTOCHROMIC LENS MANUFACTURING DEVICE, PHOTOCHROMIC LENS MANUFACTURING PROGRAM, RECORDING MEDIUM HAVING PHOTOCHROMIC LENS MANUFACTURING PROGRAM RECORDED THEREUPON, AND PHOTOCHROMIC LENS MANUFACTURING METHOD**
SYSTEM ZUR HERSTELLUNG EINER PHOTOCHROMEN LINSE, VORRICHTUNG ZUR HERSTELLUNG EINER PHOTOCHROMEN LINSE, PROGRAMM ZUR HERSTELLUNG EINER PHOTOCHROMEN LINSE, AUFZEICHNUNGSMEDIUM MIT DARAUF AUFGEZEICHNETEM PROGRAMM ZUR HERSTELLUNG EINER PHOTOCHROMEN LINSE SOWIE VERFAHREN ZUR HERSTELLUNG EINER PHOTOCHROMEN LINSE
SYSTÈME DE FABRICATION DE LENTILLE PHOTOCHROMIQUE, DISPOSITIF DE FABRICATION DE LENTILLE PHOTOCHROMIQUE, PROGRAMME DE FABRICATION DE LENTILLE PHOTOCHROMIQUE, SUPPORT D'ENREGISTREMENT SUR LEQUEL EST ENREGISTRÉ UN PROGRAMME DE FABRICATION DE LENTILLE PHOTOCHROMIQUE ET PROCÉDÉ DE FABRICATION DE LENTILLE PHOTOCHROMIQUE

(30) Priority: 31.03.2009 JP 2009088048
(43) Date of publication of application: 08.02.2012
(73) Proprietor: HOYA CORPORATION, Tokyo 161-8525 (JP)
(72) Inventor: OHTA Hiroshi, Tokyo 161-8525 (JP); IMIZU Takeshi, Tokyo 161-8525 (JP); HIROSE Takamitsu, Tokyo 161-8525 (JP); HASHIMOTO Toshikazu, Tokyo 161-8525 (JP)
(74) Representative: Betten & Resch
(86) International application number: PCT/JP2010/055815
(87) International publication number: WO 2010/114004

(56) References cited:
- EP-A1- 2 028 529
- WO-A1-2009/014086
- WO-A1-2009/025272
- JP-A- 2006 047 786
- JP-A- 2007 175 697
- JP-A- 2008 077 098
- JP-A- 2008 097 031
- US-A1- 2003 165 686
- US-A1- 2003 214 080
- US-A1- 2008 003 356
- US-A1- 2008 273 170

## Description

### Technical Field

The present invention relates to a photochromic lens manufacturing system, a photochromic lens manufacturing device, a photochromic lens manufacturing program, a recording medium having the photochromic lens manufacturing program recorded therein, and a photochromic lens manufacturing method.

### Background Art

In recent years, photochromic plastic lenses, to which organic photochromic dye is applied, are commercially available as spectacle lenses. When being placed in a bright outdoor space, these photochromic lenses develop color so as to have the same anti-glare effect as high-density color lenses; while when being brought into an indoor space, these photochromic lenses restore high transmittance. The photochromic lens is required to be able to quickly develop high-density color when a predetermined level of light is incident thereon and quickly fade color when being placed in an environment without the aforesaid light.

A lens obtained by providing a coat containing photochromic pigment (i.e., a photochromic film) to a lens substrate, and a lens obtained by directly kneading photochromic pigment into a plastic lens substrate are both widely used as the photochromic lens. With respect to the photochromic film, various manufacturing methods are proposed to obtain a photochromic lens excellent in optical responsivity (i.e., response rate and color density), color tone, and adhesion to both the lens substrate and hard coat layer.

However, the plastic lens for correcting the vision of the user is required to have complex optical design according to prescription, so that it is necessary to manufacture a lens having complex optical surfaces. As an example of complex prescription, for example, there is a kind of progressive-addition lens which is designed to have a distance vision and a near vision, wherein the power gradually changes from the distance vision to the near vision. Since such a lens is manufactured on made-to-order basis, it will take long time until the lens is supplied to the user. Other lenses manufactured on made-to-order basis include prismatic lens and the like.

With respect to the lenses manufactured on made-to-order basis, in order to reduce the time consumed from receiving order to shipping product, there is a case where semi-finished products (semi-finished lenses) having one optical surface formed on, for example, the convex-side are previously prepared. When manufacturing a lens by using semi-finished lens, a semi-finished lens having a convex surface shape that enables forming the concave surface satisfying the prescription and a thickness that includes a cutting margin of the concave surface is selected, and then a concave-side optical surface is formed on the selected semi-finished lens, so that a finished lens is obtained. With respect to the photochromic lens manufactured on made-to-order basis, a manufacturing method is used in which a semi-finished lens being provided with photochromic function is selected, and then the selected semi-finished lens is subjected to a concave surface forming processing.

Quantity of order for the photochromic lenses is smaller than normal lenses. However, in order to reduce the time consumed from receiving order of the photochromic lens, manufacturing the lens to shipping the lens to the orderer, it is necessary to prepare a large number of the semi-finished lenses provided with photochromic function. Further, in the case where the photochromic function is provided to the lens by a photochromic dye manufacturer, a semi-finished lens having a proper optical surface is selected after receiving an order, and then the selected semi-finished lens is transferred to the photochromic dye manufacturer where the photochromic function is provided. Thus, delivery time will be long. Further, since the photochromic film is soft, there is a concern that damage might be caused when transferring the lens from the dye manufacturer. Furthermore, if the lens is stored for long time in a state where photochromic function has been provided, there is a case that color tone has changed compared to the time right after the photochromic function had been provided, as well as a case that coloring rate and fading rate have changed.

In order to avoid such cases, a technique is proposed to form a protective film on the surface of the photochromic film. For example, Patent document 1 and Patent document 2 each disclose an art for providing an acrylic resin protective film on the photochromic film. These arts are proposed to improve impact resistance and storage property of the photochromic film by protecting the photochromic film.

On the other hand, Patent document 3 discloses an art for performing a continuous production, so that necessity of transferring the lenses having the photochromic function added thereto (such as case where the photochromic function is provided by a dye manufacturer) can be eliminated. The art disclosed in Patent document 3 is technique for manufacturing a photochromic lens by combining a plastic resin into which photochromic dye can be kneaded, with a clear and colorless plastic resin within a die.

US 2008/273170 A1 discloses spectacle lens and a manufacturing method for spectacle lens to ensure optical performance within a permissible range, making outward appearance excellent, and making binocular vision comfortable. In cases where a difference of prescription including dioptric power between the right and left eyes is equal to or more than prescribed, when curvature of a first refracting surface and a second refracting surface of the right and left spectacle lenses is designed, binocular vision balanced design such as selection of at least either of a first or second refracting surface out of the right and left spectacle lenses,; or an intermediate curvature of the first and second surfaces of the right and left spectacle lenses according to a dominant eye ratio so that a difference between curvature of the first refracting surfaces of right and left spectacle lenses is within a prescribed range after the right and left spectacle lenses fulfill prescription conditions containing dioptric power respectively, and optical performance of the right and left spectacle lenses are within their permissible ranges respectively.

US 2003/214080 A1 discloses a flat or curved photochromic laminate structure and a plastic photochromic lens blank that can be produced in a simple and efficient manner from relatively low-cost polymeric sheet materials. These laminates can be used to provide goggles, face shields, windows, window coverings, skylights, and optical lenses having efficient, uniform and high quality photochromic properties. The use of a polyesterurethane as the binder for the photochromic material has been found to improve the performance of the photochromic material. There may be a desire to have a protective exterior layer (e.g., an abrasion resistant layer) in combination with the lens system, but that may be provided in various methods.; In the case of using the laminate in a goggle application, the laminate may be hard coated on one or both outer surfaces with an abrasion resistant coating, antireflective coating, and/or an anti-fog hard coating.

EP 2 028 529 A1 discloses a method of calculating an optical system of an ophthalmic lens according to a given spectacle frame comprising the steps of: providing geometrical data of the spectacle frame, providing wearer data, optimization of the optical system according to at least the criteria consisting of the geometrical data of the spectacle frame, the wearer data and at least one positioning data, so as to generate at least two optical surfaces.

US 2008/003356 A1 discloses a coating method and manufacturing method of photochromic lens to manufacture a photochromic lens by uniformly applying a coating liquid having a photochromic function without leaving an uncoated area, with a minimum necessary coating amount. There is provided a manufacturing method of the photochromic lens for dripping and applying a coating liquid having the photochromic function onto a coating surface of a spectacle lens, while rotating a spectacle lens, and forming a photochromic film having the photochromic function on the coating surface, comprising dripping (ring-shaped drip part) the coating liquid in a ring shape in the vicinity of an outer circumference on the coating surface of the spectacle lens, and thereafter dripping (spiral-shaped drip part) the coating liquid in a spiral shape toward a geometrical center or an optical center of the spectacle lens from the vicinity of the outer circumference,; wherein the coating surface has a convex curved shape, and a viscosity of the coating liquid is 25 to 500 cps at 25 DEG C.

### Prior art documents

### Patent documents

Patent document 1: Patent Application Publication No. 2007-520757
Patent document 2: Patent Application Publication No. 2005-514647
Patent document 3: Patent Application Publication No. H09-506560

### Disclosure of the Invention

### Problems to be Solved by the Invention

By providing a protective film proposed in Patent document 1 and Patent document 2 on the surface of the photochromic film, damage and deterioration of the photochromic film caused when transferring the lens is restrained. However, in the plastic lens, the aforesaid protective film formed on the photochromic film does not provide new function to the plastic lens. Further, due to the provision of the protective film, some technical problems are raised such as preventing deterioration of the protective film, preventing infiltration of the photochromic dye into the protective film, securing adhesion between the photochromic film and the protective film, and adhesion between the protective film and the hard coat.

With the art disclosed in Patent document 3, it is possible to avoid the transfer of the lens to an external manufacturer for providing photochromic function, however it is not easy to combining two kinds of resin within a die.

Thus, in the case where the photochromic lens is manufactured on made-to-order basis, the method of storing the semi-finished lenses having photochromic function added thereto is also an effective method for reducing time until shipment as much as possible. However, if various kinds of semi-finished lenses are stocked in response to various prescriptions, a very large amount of stock will be needed. Further, if the lenses are stored as stock, photochromic function will deteriorate, and the lens substrate itself will deteriorate. Furthermore, when new photochromic lens has been developed, the old lenses have to be cleared out. Obviously such things are not desirable.

Similarly, in the case where the lens is stored in a state where the both surfaces have been processed (i.e., so-called "finished lens"), it is also preferred that the period from the time when the photochromic function has been added after receiving order to the time when the lens is to be shipped is more reduced. However, similar to the semi-finished lens, there will arise a problem of the protective film if the photochromic function is added by a dye manufacturer, otherwise it will be difficult to combine two kinds of material with a die. The problem that providing the photochromic function to the finished lenses satisfying various prescriptions and keeping a large stock of such lenses will cause deterioration of photochromic function still remains outstanding.

To solve the above problems, an object of the present invention is to make it possible to manufacture a lens having photochromic function on made-to-order basis and ship the manufactured lens within relatively short time, without keeping a stack of semi-finished lenses and finished lenses having the photochromic function added thereto.

### Means for Solving the Problems

The invention is defined in the independent claims.

To solve the above problems, a photochromic lens manufacturing system has an orderer side computer and a manufacturer side computer connected with each other through a communication line, and is adapted to manufacture a photochromic lens using a photochromic film forming device and a hard film forming device arranged on the manufacturer side and controlled by the manufacturer side computer. The orderer side computer transmits the following data to the manufacturer side computer through the communication line: lens substrate data related to substrate material of the lens, optical surface data related to optical surfaces of the lens, data related to a photochromic film, and data related to a hard film.

Further, the manufacturer side computer comprises: a lens substrate selecting means adapted to select a lens substrate having a suitable optical surface formed in a suitable lens substrate material based on the lens substrate data and the optical surface data received from the orderer side computer; a photochromic film forming data selecting means adapted to select at least forming data of the photochromic film based on the data related to the photochromic film, and output the selected data to the photochromic film forming device; and a hard film forming data selecting means adapted to select at least forming data of the hard film based on the data related to the hard film, and output the selected data to the hard film forming device. The photochromic film forming device forms the photochromic film on the lens substrate based on the data related to the photochromic film inputted from the manufacturer side computer, and the hard film forming device forms the hard film on the lens substrate based on the data related to the hard film inputted from the manufacturer side computer.

With the photochromic lens manufacturing system the forming data of the photochromic film and the forming data of the hard film selected in the manufacturer side computer are outputted to the photochromic film forming device and the hard film forming device by the photochromic film forming data selecting means and the hard film forming data selecting means, and the respective films are formed by a series of steps, so that it is possible to more rapidly manufacture the photochromic lens while restraining the deterioration of the photochromic function caused after the photochromic function has been provided to the lens substrate.

Incidentally, in the photochromic lens manufacturing system , it is preferred that the photochromic film forming device is a wet film forming device. For example, in the case where the photochromic lens manufacturing system is applied to a spectacle lens, when providing the photochromic function to a finished lens or semi-finished lens selected according to the prescription, although the photochromic lens may be obtained by a method of molding a plastic material having photochromic pigment kneaded thereinto or by a method of combining a dyed plastic material with a clear and colorless plastic material, however a lens having photochromic function can be obtained in a short time by employing the wet film forming method. Thus, it is possible to more rapidly manufacture the photochromic lens after receiving an order.

It is preferred that the wet film forming device is a coating device that forms the film using a spin-coating method. In the case where an other type of wet film forming device, such as a dipping device, is employed, the photochromic liquid is coated on both surfaces, so that if an optical surface is to be formed on one surface after the photochromic liquid has been coated, the coated film on this surface will be ablated as a result, and therefore the use of the photochromic liquid increases unnecessarily. While in the case where the spin-coating method is used, it is possible to efficiently and uniformly form a photochromic film on one surface only.

Further, in the case where the spin-coating method is used, since it is possible to obtain more uniform the thickness of the coated film, unevenness in density of color tends not to occur, i.e., photochromic function can be maintained more uniformly. Furthermore, in the case where the spin-coating method is used, the use of the photochromic liquid can be reduced compared to other wet film forming methods.

Similarly, it is preferred that the hard film forming device is a wet film forming device, and it is particularly preferred that the hard film forming device is a coating device that uses a spin-coating method. By employing a wet film forming device, particularly a coating device that uses a spin-coating method, it is possible to rapidly form the hard film and therefore expedite the production of the photochromic lens, so that productivity can be improved.

Further, in the photochromic lens manufacturing system at least either of color and density is included in the data related to the photochromic film. In such a case, it is preferred that the manufacturer side computer has a function of selecting, as the forming data of the photochromic film, at least either of the type of photochromic liquid corresponding to the color of the photochromic film and the thickness of coated film corresponding to the density of the photochromic film, and outputting the selected data to the photochromic film forming device. For example, in a lens store or the like, the data related to the performance of the photochromic lens is inputted to the orderer side computer, and the lens is manufactured by the manufacturer side computer of a lens manufacturer or the lens store itself using such data, so that it is possible to more rapidly manufacture a photochromic lens with the performance required by the user. Further, by forming the photochromic film corresponding to the order details on color and density in such a manner, it is possible to reduce the cost for stocking and storing the lens substrates having photochromic function.

Further, the photochromic lens manufacturing system may include an optical surface forming device adapted to form an optical surface on the surface of the lens substrate other than the surface having the photochromic film formed thereon, and the manufacturer side computer may further include an optical surface forming data selecting means adapted to select optical surface forming data from the optical surface data, and output the selected data to the optical surface forming device. By providing the optical surface forming device and the optical surface forming data selecting means, it is possible to rapidly manufacture the photochromic lens and supply the photochromic lens to the order receiver even if a semi-finished product such as a semi-finished lens or the like is used as the lens substrate.

Further, the photochromic lens manufacturing system may include a lens substrate storage device adapted to store a plurality of types of lens substrates. In such a case, the lens substrate selecting means of the manufacturer side computer may output data related to the type of the selected lens substrate to the lens substrate storage device, and the lens substrate storage device may have a transfer means adapted to select the lens substrate fitting the data related to the type of the lens substrate, and transfer the selected lens substrate to the photochromic film forming device.

Thus, the lens substrate storage device adapted to store a plurality of types of lens substrates is provided, and the manufacturer side computer selects a suitable lens substrate (i.e., a semi-finished lens or finished lens having a particular optical surface formed on one surface or both surfaces of a lens substrate material with particular refractive index and ultraviolet transmittance, for example,) from the plurality of types of lens substrates, and transfers the selected lens substrate to the photochromic film forming device under automatic control, and thereby selection of the lens substrate and attachment of the lens substrate to the photochromic film forming device can be performed rapidly, so that productivity of the photochromic lens can be more improved.

Incidentally, in the case where an antireflection film is to be further formed on the hard film, the data transmitted from the orderer side computer may include data related to the antireflection film, an antireflection film forming device may be provided, and the manufacturer side computer may have an antireflection film data selecting means adapted to select forming data of the antireflection film based on the data related to the antireflection film and output the selected forming data of the antireflection film to the antireflection film forming device. In such a case, the antireflection film forming device may either be a dry film forming device using a vacuum device, or be a wet film forming device that forms film by a spin-coating method. It is preferred that the form of antireflection film forming device is set according to various conditions such as the scale of the manufacturing facility.

Further, there is a photochromic lens manufacturing device capable of manufacturing a photochromic lens even in a lens store.

The photochromic lens manufacturing device includes a data storage unit adapted to store information related to the lens to be manufactured, a surface treatment unit adapted to perform surface treatment of the photochromic film forming and the like, and a control unit adapted to control the operation of the surface treatment unit.

Surface treatment data is inputted to the data storage unit, the surface treatment data including: optical surface data related to optical surfaces of a lens to be manufactured, lens substrate data related to lens substrate material, and photochromic data at least related to a photochromic film.

The surface treatment unit includes a photochromic film forming means and a hard film forming means, wherein the hard film forming means is adapted to form a hard film, and the photochromic film forming means is adapted to form, based on the photochromic data, a photochromic film on a lens substrate selected based on the optical surface data and the lens substrate data, the lens substrate having an optical surface formed on at least the convex-side thereof.

The surface treatment unit is controlled by the control unit. The control unit includes a first film forming control device and a second film forming control device, wherein the first film forming control device is adapted to set a film forming condition of the photochromic film based on the optical surface data, the lens substrate data and the photochromic data, and the second film forming control device is adapted to set a film forming condition of the hard film based on the lens substrate data.

In the photochromic lens manufacturing device the first film forming control device sets the suitable film forming condition with the control unit based on the optical surface data related to the shape of the optical surface and the lens substrate data related to the material of the lens substrate and the like stored in the data storage unit. Further, selection of the photochromic pigment, selection of the coating liquid and the like based on the photochromic data are also performed by the control unit. For example, photochromic film material can be prepared within the photochromic film forming device. With the manufacturing device, even a person (such as a staff of a lens store) having less knowledge on optical surface data, lens substrate material, photochromic material and/or less knowledge on coating can preferably manufacture a photochromic lens desired by the used.

The preferable manufacturing device is the one whose photochromic film forming means is a spin-coating device. In such a case, the spin-coating device includes a rotatable frame adapted to mount the lens substrate with a surface-to-be-coated (i.e., an optical surface onto which the photochromic film is to be formed) facing upward, and a dropping means adapted to drop a photochromic liquid from a nozzle onto the surface-to-be-coated. The optical surface data stored in the data storage unit includes curve data related to curve of the curved surface of the optical surface, and dimension data related to the outside dimension of the optical surface, and the first film forming control device of the control unit controls the distance between the surface-to-be-coated and the nozzle based on the curve data, and controls the movement trajectory of the nozzle based on the dimension data.

The coating liquid for forming the photochromic film generally has high viscosity. Thus, in the photochromic film forming means, it necessary to distinctly control the place where the coating liquid is to be supplied to the surface-to-be-coated and the height at which the coating liquid is to be supplied to the surface-to-be-coated. However, in the case where the lens is a plastic lens, since the lens may be a single-vision lens or a progressive-addition lens, the shape of the curved surface changes largely. In contrast, since the photochromic lens manufacturing device can select the supply position based on the dimension data of the lens and adjust the dropping height based on the curved surface data of the lens, it is possible to form a desired photochromic film regardless of the shape of the curved surface of the optical surface. Thus, it is possible to manufacture a photochromic lens while restraining the unevenness in thickness of the coated film regardless of the shape of the curved surface of the optical surface of the lens.

Further, in the photochromic lens manufacturing device at least either of color and density is included in the photochromic data, and, as the film forming condition of the photochromic film, the first film forming control device selects at least either of the type of the photochromic liquid corresponding to the color of the photochromic film and the thickness of the coated film corresponding to the density of the photochromic film, and outputs the selected data to the photochromic film forming means.

Due to such function, a photochromic lens with the photochromic function desired the user can be manufactured even by an operator who has no particular knowledge.

Further, the photochromic lens manufacturing device may have a function of forming a concave-side optical surface. In such a case, the photochromic lens manufacturing device includes an optical surface forming unit. Further, it preferred that the optical surface data includes concave-side optical surface forming data, and the control unit includes an optical surface forming control device adapted to control an optical surface forming control device of the optical surface forming unit for forming the concave-side optical surface based on the lens substrate data and the concave-side optical surface forming data.

With the photochromic lens manufacturing device a high-quality lens can be can be rapidly manufactured even if the lens is an individually designed lens (i.e., a so-called custom-designed lens) provided with photochromic function, wherein the optical property of the individually designed lens is set according to the visual acuity of the user.

Further, there is a photochromic lens manufacturing program incorporated in the manufacturer side computer of the photochromic lens manufacturing system and a recording medium having the program recorded therein. The program causes a photochromic lens manufacturing computer incorporated in the photochromic lens manufacturing device to implement the following functions, the photochromic lens manufacturing computer having a data storage unit:
(a) a function of selecting optical surface data related to optical surfaces of a lens substrate from the data storage unit;
(b) a function of selecting lens substrate data related to the lens substrate material from the data storage unit;
(c) a function of selecting photochromic data related to a photochromic film from the data storage unit;
(d) a function of selecting surface treatment data from the data storage unit, the surface treatment data including data related to a hard film;
(e) a lens substrate selecting function of selecting, based on the optical surface data, a lens substrate having a suitable optical surface formed thereon;
(f) a photochromic film forming data selecting function of selecting at least forming data of the photochromic film based on the photochromic data, and outputting the selected data to a photochromic film forming device; and
(g) a hard film forming data selecting function of selecting at least forming data of the hard film based on the data related to the hard film, and outputting the selected data to a hard film forming device.

By causing the photochromic lens manufacturing computer to execute the photochromic lens manufacturing program having such functions, it is possible to preferably operate the manufacturer side computer of the photochromic lens manufacturing system.

Further, the photochromic lens manufacturing method includes:
(1) a lens substrate selecting step of selecting a lens substrate having an optical surface formed on at least one surface thereof;
(2) a photochromic film forming step of providing a photochromic function to the surface having the optical surface formed thereon; and
(3) a hard film forming step of providing a hard film to at least the surface having the photochromic film formed thereon.

The lens substrate selecting step, the photochromic film forming step and the hard film forming step are performed as a series of steps.

Since the lens substrate selecting step, the photochromic film forming step and the hard film forming step are performed as a series of steps, it is possible to rapidly manufacture various types of lenses having photochromic function by, for example, selecting a lens having an optical surface fitting the data of the received order, then forming a photochromic film on that surface, and then consecutively forming a hard film. Further, it is not necessary to prepare and store a large mount of lenses each obtained by forming a photochromic film on a finished lens or semi-finished lens corresponding to the prescription of a spectacle lens, for example. Thus, it is possible to manufacture a photochromic lens meeting the requirement of the user not only within short time but also with low cost. Further, since at least the hard film (such is the hard coat) is consecutively formed on the photochromic film, it is not necessary to additionally form an unnecessary film (such as a photochromic film protecting film) on the photochromic film. Thus, it is possible to restrain physical deterioration of the lens itself caused by quality deterioration of the photochromic function, round-trip transfer to and from the dye manufacturer, and the like.

Further, in the case where a hard film has already been from on the surface the lens substrate for improving scratch resistance during storage, the photochromic film may be formed on the hard film. In such a case, a hard film is to be formed again after the photochromic film has been formed. Whether or not there is other layer between the both is not limited as long as both the optical property, which is obtained based on the shape of the optical surface, and the photochromic property, which is obtained based on the photochromic film, can be achieved.

Further, in the case where the photochromic lens is manufactured using a semi-finished lens, for example, the photochromic lens manufacturing method may further include a one-side optical surface forming step of forming, immediately after the photochromic film forming step, an optical surface on the surface of the lens substrate other than the surface having the photochromic film formed thereon. In such a case, the photochromic film forming step, the one-side optical surface forming step and the hard film forming step may be continuously performed in this order. In such a case, the hard film is formed at least on the surface having the photochromic film formed thereon; however, it is preferred that the hard film is also be formed on the other optical surface.

Further, the photochromic film forming step, the hard film forming step and the one-side optical surface forming step may also be continuously performed in this order. In such a case, the hard film may be further formed the optical surface obtained after the one-side optical surface forming step (i.e., the surface having no photochromic film formed thereon). Due to the hard film, scratch resistance of the other surface can be improved. By doing so, even if the photochromic lens manufacturing method includes the one-side optical surface forming step, the quality deterioration of the photochromic function can be restrained without adding an unnecessary protective film on the photochromic film.

Further, in the one-side optical surface forming step, it is preferred that the optical surface is formed by optical polishing. By forming optical surface by optical polishing, it is possible to form an excellent optical surface without causing quality deterioration of the photochromic film formed on the other surface.

Incidentally, the photochromic lens manufacturing method may further include a step for firming a foundation layer (i.e., a so-called primer layer) between the photochromic film and the lens substrate. By formed the foundation layer, shrinkage of the photochromic film caused during the polymerization is alleviated by the foundation layer. As a result, joining state between the surface of the lens substrate and the photochromic film is improved, and the photochromic film is inhibited from peeling off. Further, since adhesion between the lens substrate and the photochromic film is improved, the photochromic film is inhibited from peeling off. Thus, it is possible to manufacture a photochromic lens with better quality.

Incidentally, the photochromic lens manufacturing method may further include a step of forming a material layer capable of restrain movement of photochromic film material components when forming the photochromic film before or after the foundation layer forming step (i.e., between the lens substrate and the foundation layer or between the foundation layer and the photochromic film), or further, before the hard film forming step after the photochromic film forming step. Further, the photochromic lens manufacturing method may includes a step of forming, after the photochromic film forming step, a foundation layer for improving adhesion of the hard film.

### Advantages of the Invention

According to the present invention, it is possible to reduce necessary time between receiving order to shipping product without storing a large mount of lenses and lens substrates having a photochromic film formed thereon for long time, and it is possible to manufacture the photochromic lens while restraining the deterioration of the photochromic function.

### Brief Description of Drawings

FIG. 1 is a block diagram showing a photochromic lens manufacturing system according to an embodiment of the present invention;
FIG. 2 is a block diagram for explaining the function of a manufacturer side computer of the photochromic lens manufacturing system shown in FIG. 1;
FIG. 3 is a diagram showing the configuration of an example of a control system of a photochromic lens manufacturing device;
FIG. 4 is a view showing the schematic configuration of an example of a photochromic film forming device;
FIG. 5 is a view schematically showing positional relationship between a dispenser of the photochromic film forming device shown in FIG. 4 and a lens substrate;
FIG. 6 is a plan view showing dropping state of a coating liquid dropped by the dispenser of the photochromic film forming device shown in FIG. 4 onto a surface-to-be coated of the lens substrate;
FIG. 7 is a diagram showing the configuration of an example of an optical surface forming unit;
FIG. 8 is a flowchart for explaining a photochromic lens manufacturing method according to an embodiment of the present invention;
FIG. 9 is a flowchart for explaining a photochromic film forming step in the flowchart for explaining a photochromic lens manufacturing method shown in FIG. 8;
FIG. 10 is a graph showing change of curvature radius with respect to the center thickness after one-side optical surface is formed for both a lens substrate and a lens substrate having the photochromic film formed thereon;
FIG. 11 is a graph showing color coordinates of a lens substrate having a photochromic film (brown) formed thereon before and after being stored;
FIG. 12 is a graph showing color coordinates of a lens substrate having a photochromic film (gray) formed thereon before and after being stored;
FIG. 13 is a graph showing color spectral transmittance curves after manufacture of the photochromic lens (brown) according to the embodiment; and
FIG. 14 is a graph showing color spectral transmittance curves after manufacture of the photochromic lens (gray) according to the embodiment.

### Best Modes for Carrying Out the Invention

A photochromic lens manufacturing system, a photochromic lens manufacturing device and a photochromic lens manufacturing method according to embodiments of the present invention will be described as follows. Incidentally, although the following embodiments are based on an example in which the photochromic lens manufactured is a spectacle photochromic lens, the present invention may also be applied to the manufacture of various kinds of optical lenses having photochromic function other than the spectacle photochromic lens. The description will be given in the following order.
1. Embodiment of photochromic lens manufacturing system
2. Embodiment of photochromic lens manufacturing device
3. Embodiment of photochromic lens manufacturing method
   [1] Material of photochromic lens
   [2] Forming method of photochromic film
   [3] Forming method of optical surface
   [4] Manufacturing process
4. Examples and comparative examples

### 1. Embodiment of photochromic lens manufacturing system

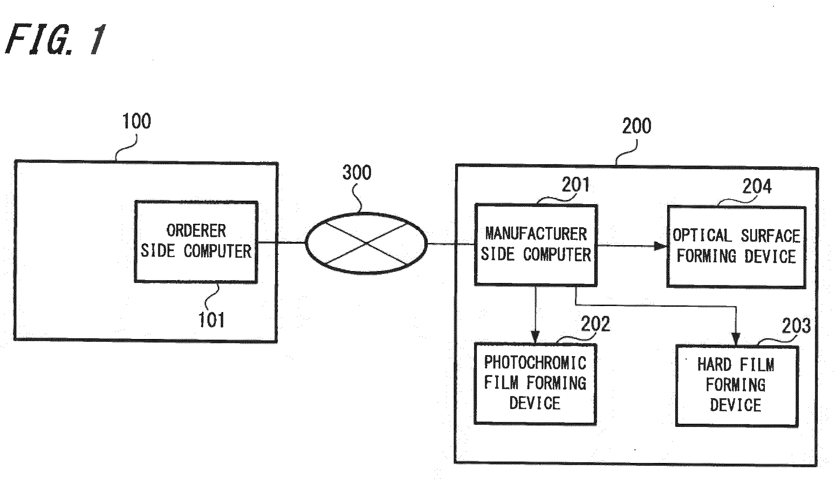

FIG. 1 is a block diagram showing an embodiment of an entire system for supplying photochromic lens, to which the photochromic lens manufacturing system according to the present invention is applied. As shown in FIG. 1, an orderer 100, such as a lens store, an ophthalmologist or the like, is provided with an orderer side computer 101. The orderer side computer 101 is connected with a manufacturer side computer 201 arranged in a lens processing equipment 200 through a communication line 300, such as a wireless LAN communication line, an Internet communication line or the like, so that communication can be performed between the orderer side computer 101 and the manufacturer side computer 201. The lens processing equipment 200 may either be provided in the orderer 100 such as a lens store, an ophthalmologist or the like (for example, be arranged next to the orderer 100), or be provided in a remote location. The orderer 100 is also provided with a measuring instrument for measuring visual acuity and the like of the user, and the measuring instrument may be connected to the orderer side computer 101. Further, the lens processing equipment 200 is also provided with a photochromic film forming device 202, a hard film forming device 203 and an optical surface forming device 204. If the system is adapted to manufacture the photochromic lens using finished lens only, the optical surface forming device 204 may also be omitted.

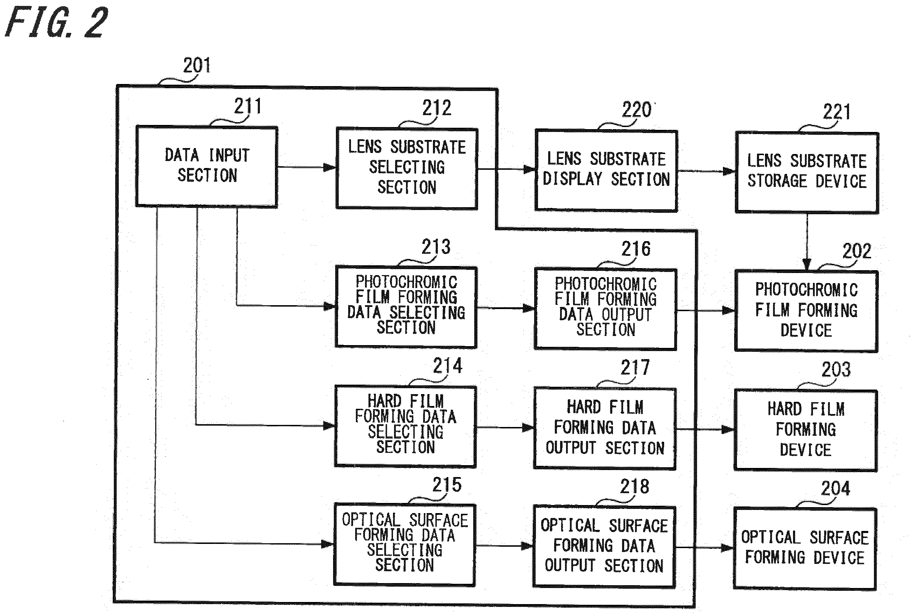

As shown in FIG. 2, the manufacturer side computer 201 includes a data input section 211, a lens substrate selecting section 212, a photochromic film forming data selecting section 213, a hard film forming data selecting section 214, and an optical surface forming data selecting section 215. The manufacturer side computer 201 further includes a photochromic film forming data output section 216, a hard film forming data output section 217, and an optical surface forming data output section 218. The data outputted from the photochromic film forming data output section 216 is transmitted to the photochromic film forming device 202 through a communication line (such as a wireless communication line or the like) so that the data is inputted to the photochromic film forming device 202. In the similar manner, the data outputted from the hard film forming data output section 217 is transmitted to the hard film forming device 203, and the data outputted from the optical surface forming data output section 218 is transmitted to the optical surface forming device 204. Incidentally, if the system is adapted to manufacture the photochromic lens using finished lens, the optical surface forming data selecting section 215 and the optical surface forming data output section 218 may also be omitted. Further, the present invention also includes a configuration in which a judgment is made base on the data related to optical surface to determine whether a finished lens is to be used or a semi-finished lens is to be used, and these functions are operated according to necessity.

In such manufacturing system, the steps from placing order of the photochromic lens, receiving the order and manufacturing the photochromic lens on the manufacturer side, until supplying the photochromic lens to the lens store side will be described below. The same goes for the case where the lens store itself is the manufacturer. First, necessary data related to the photochromic lens is inputted to the orderer side computer 101 of the orderer 100. The inputted data includes, for example, data related to spectacle prescription, data related to the shape of the face of the user (such as the pupil distance and the like), data related to the spectacles wearing state (such as the shape of the spectacle frame), data related to the type of the lens substrate material and the like (i.e., the lens substrate material name selected according to refractive index, ultraviolet transmittance and the like, the diameter of the lens, the thickness of the lens, the base curve of the lens and the like), data related to the photochromic film, data related to the hard film, and the like. As the data related to the photochromic film, it is possible to input the color and density of the photochromic film, and time for coloring and time for fading of the photochromic film. As the data related to the hard film, it is possible to input the type of the hard film, for example.

Next, the aforesaid data is inputted to the data input section 211 (shown in FIG. 2) of the manufacturer side computer 201 of the lens processing equipment 200 through the communication line 300. Further, data related to the optical surface of the lens is selected based the data related to the spectacle prescription, the data related to the shape of the face, the data related to the spectacles wearing state, and the like. Based on the data related to the optical surface of the lens and the data related to the lens substrate material and the like, the lens substrate is first selected by the lens substrate selecting section 212. The type of the selected lens substrate is outputted to, for example, a lens substrate display section 220 and the like. Based on the result, a lens substrate is selected by the lens processing equipment 200. Incidentally, in the case where a lens substrate storage device 221 is provided, the data related to the type of the lens substrate may also be transmitted from the lens substrate display section 220 to the lens substrate storage device 221, and based on such data, the lens substrate is selected and transferred to the photochromic film forming device 202 under automatic control. Further, if it is selected, based on the data related to the optical surface, to manufacture the lens using a semi-finished lens, optical surface forming data related to the unfinished surface will be selected by the optical surface forming data selecting section 215, and necessary data will be outputted from the optical surface forming data output section 218 to the optical surface forming device 204.

On the other hand, photochromic film forming data (i.e., the type of the material of the photochromic film and the thickness of the photochromic film) is selected by the photochromic film forming data selecting section 213 based the data related to the photochromic film inputted to the data input section 211, and the selected data is outputted from the photochromic film forming data output section 216 to the photochromic film forming device 202. The dispensed liquid for forming the photochromic film, the revolution speed, which determines the thickness of the coated film, the coating condition such as coating time and the like, the polymerization condition (in the case where the film is cured by polymerization), and the like are selected based on the aforesaid data, and the photochromic film corresponding to the order details is formed in a spin-coating tank, for example, of the photochromic film forming device 202.

Further, hard film forming data of the type of the hard film corresponding to the ordered hard film is selected by the hard film forming data selecting section 214 based on the data related to the hard film inputted to the data input section 211, and the selected data is outputted from the hard film forming data output section 217 to the hard film forming device 203. The forming conditions of the hard film such as the constituent material of the hard film, the polymerization condition of the hard film and the like are inputted, and thereby a hard film corresponding to the order details is formed.

With the photochromic lens manufacturing system having the above configuration, the selection of the lens substrate, the formation of the photochromic film, and the formation of the hard film can be achieved by a series of consecutive steps. Further, even in the case where a semi-finished lens is selected as the lens substrate, the formation of the photochromic film, the formation of the optical surface, and the formation of the hard film can be achieved by a series of consecutive steps. Further, it is possible to manufacture the photochromic lens by performing the formation of the photochromic film, the formation of the hard film and the formation of the optical surface as a series of consecutive steps.

### 2. Embodiment of photochromic lens manufacturing device

A photochromic lens manufacturing device according to an embodiment of the present invention will be described below.

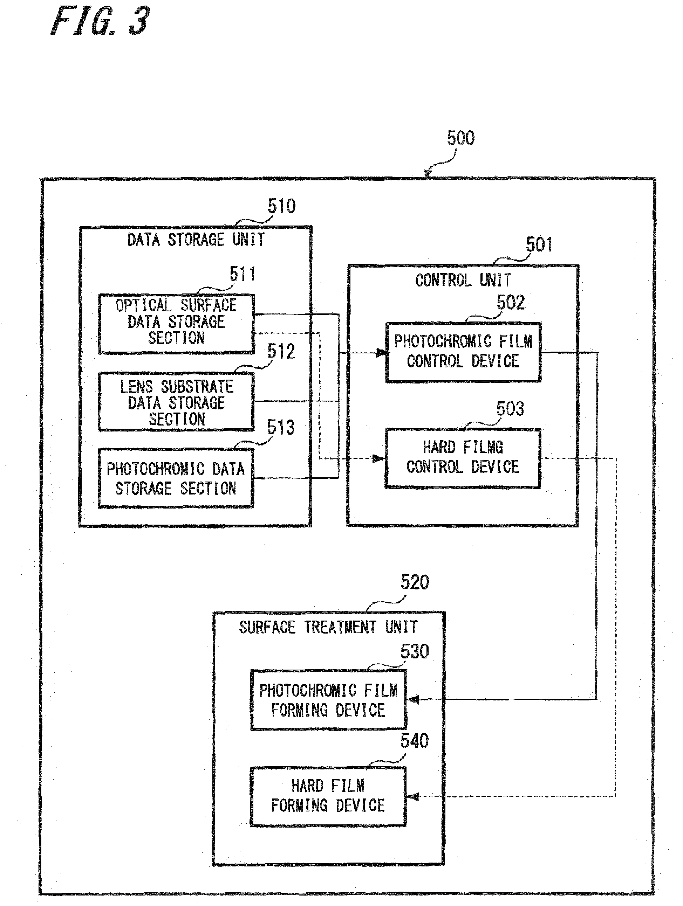

FIG. 3 is a diagram schematically showing the configuration of an example of a control system of a photochromic lens manufacturing device 500 of the present invention. The photochromic lens manufacturing device 500 includes a data storage unit 510 adapted to store information related to the lens to be manufactured, a control unit 501 adapted to control surface treatment of the lens, and a surface treatment unit 520 adapted to process the surface of the lens.

The data storage unit 510 includes an optical surface data storage section 511, a lens substrate data storage section 512, and a photochromic data storage section 513, wherein the optical surface data storage section 511 is adapted to store dimension data such as the curve data of the surface-to-be-coated, the diameter of the lens and the like, the lens substrate data storage section 512 is adapted to store material data related to the material of the lens substrate and outermost layer material data indicating whether a hard film is to be coated on the surface-to-be-coated, and the photochromic data storage section 513 is adapted to input photochromic performance such as color tone and density of the photochromic film to be formed.

The control unit 501 includes a first film forming control device 502 and a second film forming control device 503, wherein the first film forming control device 502 is adapted to take out necessary data from the data storage unit 510 to calculate the condition to perform film-forming control of the photochromic film, and the second film forming control device 503 is adapted to take out necessary data from the data storage unit 510 to calculate the condition to perform film-forming control of the hard film.

The surface treatment unit 520 includes a photochromic film forming device 530 for forming the photochromic film (i.e., a photochromic film forming means), and a hard film forming device 540 for forming the hard film (i.e., a hard film forming means).

Each unit will be described below in more details.

The data storage unit 510 is adapted to allow the operator to input information of the order received from the user, and store such information. Among the information, the data about the lens shape is stored in the optical surface data storage section 511. As concrete data, the lens base curve data of the lens, the lens external shape data, the lens thickness data and the like are required to be stored. Further, if the lens is a progressive-addition lens, there is a possibility that the curvature of the curved surface at the near power center is different from the curvature of the curved surface at the distance power center. In the case where the lens has such a shape, three-dimensional data of the curved surface will be stored.

The material data and the outermost layer material data are stored in the lens substrate data storage section 512. The refractive index of the plastic lens is dependent on the material of the lens substrate. The material of the hard film is determined based on the refractive index; and in the case where an antireflection film is to be formed, the construction of the antireflection film is also determined based on the refractive index. The material data is important element for performing film-forming control of the hard film, and the like.

Further, the outermost layer material data is indispensable element for forming the photochromic film. It is necessary to set different conditions between the case where a hard film is to be coated on the outermost surface and the case where no hard film is to be coated on the outermost surface. The outermost layer material data is important element for performing film-forming control of the photochromic film.

Information related to design of the photochromic film desired by the user, such as the color tone, the density and the like when coloring, is stored in the photochromic data storage section 513.

The control unit 501 includes the first film forming control device 502 for performing film-forming control of the photochromic film and the second film forming control device 503 for performing film-forming control of the hard film. The first film forming control device 502 controls the photochromic film forming device 530 of the surface treatment unit 520 (corresponding to the photochromic film forming device 202 shown in FIG. 2) based on the optical surface data, the lens substrate data and the photochromic data of the lens to be manufactured stored in the data storage unit 510. The details of the control method will be described below when describing the details of the photochromic film forming device 530. The second film forming control device 503 included in the control unit 501 controls the hard film forming device 540 (corresponding to the hard film forming device 203 shown in FIG. 2) based on the lens substrate data and the optical surface data stored in the data storage unit 510.

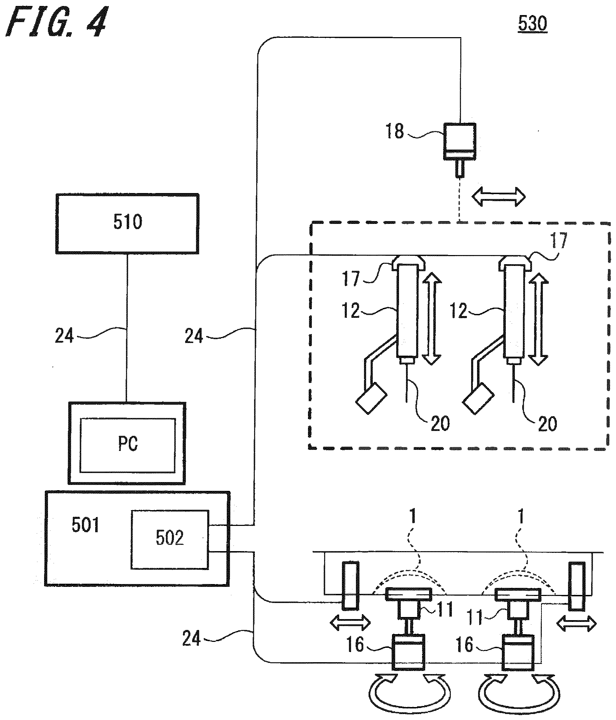

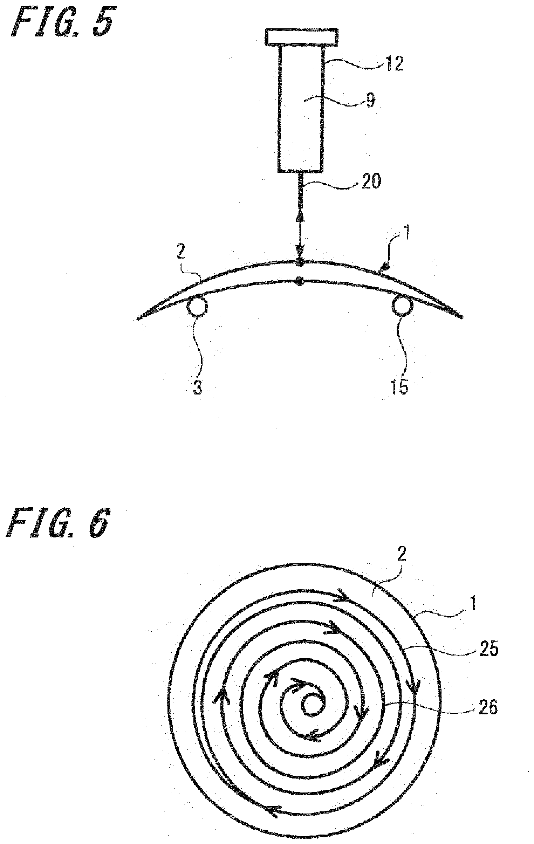

Next, the details of the photochromic film forming device 530 included in the surface treatment unit 520 will be described below. FIG. 4 is a view showing the schematic configuration of an example of the photochromic film forming device 530, and FIG. 5 is an enlarged view schematically showing the configuration of a primary portion of the photochromic film forming device 530.

The photochromic film forming device 530 shown in FIGS. 4 and 5 includes a spin holder 11 for holding a lens substrate 1, and a dispenser 12, which serves as a dropping device for dropping a coating liquid 9 onto a surface-to-be-coated 2, which is the convex surface of the lens substrate 1 (see FIG. 5). The photochromic film forming device 530 is connected to the first film forming control device 502 of the control unit 501, and the first film forming control device 502 is connected to the data storage unit 510 through a communication line 24 (such as a communication cable, a wireless LAN communication line or the like), wherein the data storage unit 510 has the optical surface data of the lens substrate 1 stored therein.

The coating liquid 9 to be injected into the dispenser 12 is selected based on the photochromic data and the lens substrate data stored in the data storage unit 510. The coating liquid 9 is selected or prepared based on both the design property of the ordered photochromic film (such as the color tone, the density, and the coloring/fading rate) and the information about the surface-to-be-coated 2. The condition of the coating liquid 9 is derived by the first film forming control device 502, and the coating liquid 9 is selected or prepared by the photochromic film forming device 530 or the operator according to the derived condition.

As shown in FIG. 5, the surface of the lens substrate 1 as the surface-to-be-coated 2 is formed in a curved shape convexed upward (i.e., convex surface shape) for example. Further, an O-ring 15 (see FIG. 5) of the spin holder 11 (see FIG. 4) is brought into contact with a rear surface 3 of the lens substrate 1 formed in concave surface shape, for example. By providing the spin holder 11 with an exhaust means (not shown in the drawings), the lens substrate 1 is absorbed so as to be held by the spin holder 11 with the O-ring 15 due to the negative pressure. On the other hand, as shown in FIG. 4, at least one dispenser 12 is provided corresponding to the lens substrate 1. FIG. 4 shows an example in which two dispensers 12 are provided, however the present invention is not limited thereto. The dispenser 12 is arranged so as to be able to be moved up and down under the drive of a dispenser motor 17 with respect to the lens substrate 1 held by the spin holder 11 along, for example, the vertical direction indicated by arrow "a" shown in FIG. 4. The dispenser 12 is arranged so as to be able to be moved along, for example, the horizontal direction of a diametrical direction (indicated by arrow "b" shown in FIG. 4) of the lens substrate 1 held by the spin holder 11 under the drive of a slide motor 18. The spin holder 11 is arranged so as to be able to be rotated along arrow "c" shown in FIG. 4 under the drive of a spin motor 16. Further, the spin holder 11 may also be arranged so as to be able to be moved along, for example, the horizontal direction indicated by arrow "e" shown in FIG. 4 under the drive of a slide motor 19.

The spin motor 16, the dispenser motor 17, and the slide motors 18 and 19 are connected to the first film forming control device 502 through the communication line 24, so that the operations of the spin motor 16, the dispenser motor 17, and the slide motors 18 and 19 are controlled. Further, the dispenser 12 is provided with a cylinder motor 21, and the cylinder motor 21 is connected to the first film forming control device 502 through the communication line 24 in the same manner, so that the operation of the cylinder motor 21 is controlled. Thus, the amount of the coating liquid 9 dropped from the dispenser 12 is controlled according to the viscosity of the coating liquid 9.

The coating liquid 9, which is a kind of liquid having photochromic function (i.e., its color changes when being irradiated with the light containing ultraviolet ray), has higher viscosity than general coating liquids, and the viscosity of the coating liquid 9 is 25 cps to 500 cps at 25°C. By using the photochromic film forming device 530 having the above configuration, even the coating liquid 9 having high viscosity can be coated onto the convex shaped surface-to-be-coated 2 (see FIG. 4) of the lens substrate 1 with a film thickness of several tens of pm (for example, 30µm), and therefore it is possible form a photochromic film having less unevenness in thickness (not shown in the drawings).

The photochromic film is coated onto the convex shaped surface-to-be-coated 2 of the lens substrate 1 using the photochromic film forming device 530 under the control of the first film forming control device 502. The concrete control is achieved by holding the lens substrate 1 to the spin holder 11, and dropping the coating liquid 9, which contains the photochromic pigment and the like, from a nozzle 20 of the dispenser 12 while rotating the spin holder 11. During the period, the nozzle 20 of the dispenser 12 is linearly moved from the vicinity of the periphery of the lens substrate 1 toward the geometrical center or optical center of the lens substrate 1 in a state where the nozzle 20 does not contact the lens substrate 1. By the rotation of the lens substrate 1 caused by the spin holder 11 and the movement of the nozzle 20, the coating liquid 9 is spirally dropped onto the surface-to-be-coated 2. Incidentally, it is also possible to form a ringlike dropping trajectory 25 near the periphery, and form a spiral dropping trajectory 26 on the inner side as shown in FIG. 6. By forming the photochromic film in this manner, it is possible to form a photochromic film having uniform film thickness even if the coating is performed using the coating liquid 9 having high viscosity.

The movement trajectory of the nozzle 20 of the dispenser 12 when the coating liquid 9 is being dropped onto the surface-to-be-coated 2 of the lens substrate 1 is determined by the first film forming control device 502 based on the shape data (i.e., the dimension data and the surface shape data) of the lens substrate 1 stored in the data storage unit 510.

Next, the photochromic film forming device 530 drives the spin motor 16 to rotate the spin holder 11. Due to the rotation of the spin holder 11, the coating liquid 9 is smoothed on the surface-to-be-coated 2. Conditions such as rotation speed, rotation time and the like are set and controlled by the first film forming control device 502 based on the lens substrate data (such as outermost layer material data) and the dimension data of the optical surface stored in the data storage unit 510. The rotation speed may either be a constant value from beginning to end, or be set to a plurality of levels.

After the smoothing process is completed, the lens substrate 1 is released from the spin holder 11. The lens substrate 1 is transferred to a drying step by a transfer device. Incidentally, in the drying step, the photochromic film coated on the surface-to-be-coated 2 of the lens substrate 1 is cured and dried by ultraviolet light irradiation in a nitrogen atmosphere. The thermal property of the substrate material, the optimal wavelength of the ultraviolet for polymerizing the photochromic film, the irradiation time and the like are set as the drying condition. Thus, such condition is set and controlled by the first film forming control device 502 based on the lens substrate data (i.e., the material) and the photochromic data (i.e., the coating liquid and the like).

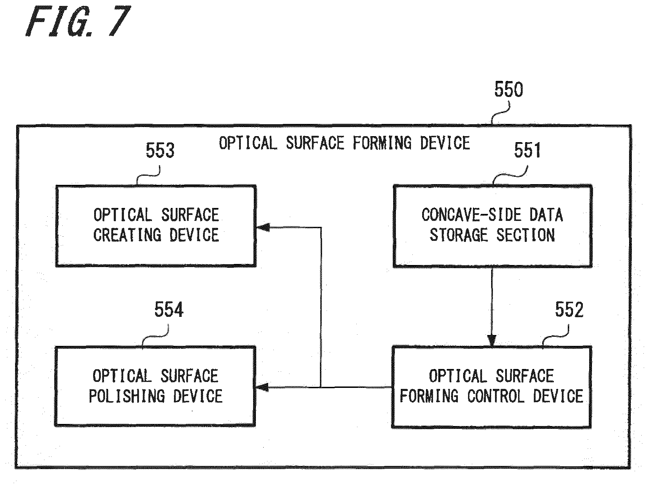

In the case where the lens substrate 1 is a semi-finished lens, the concave-side optical surface is formed. The concave-side optical surface is formed by an optical surface forming device. FIG. 7 is a diagram showing the configuration of an example of a control system of an optical surface forming device 550. The optical surface forming device 550 includes an optical surface creating device 553 and an optical surface polishing device 554. The operation condition of the optical surface creating device 553 and the operation condition of the optical surface polishing device 554 are respectively set by an optical surface forming control device 552, and thereby the optical surface creating device 553 and the optical surface polishing device 554 are controlled by the optical surface forming control device 552. Further, the optical surface forming device 550 has a concave-side data storage section 551. The concave-side data stored in the optical surface data storage section 511 and the material data stored in the lens substrate data storage section 512 of the data storage unit 510 shown in FIG. 3 are transmitted to the concave-side data storage section 551 through a communication line (such as a communication cable, a wireless LAN communication line or the like) and thereby are stored in the concave-side data storage section 551, and a concave-side cutting condition is set based on these data. Based on the concave-side cutting condition, the optical surface forming control device 552 outputs a control signal for cutting/creating the concave-side optical surface to the optical surface creating device 553, and outputs a control signal for mirror polishing the cutting surface to the optical surface polishing device 554. Process regarding the concave-side optical surface will be described later in more detail when describing an embodiment of the photochromic lens manufacturing method.

Incidentally, in the present embodiment, the device for forming optical surface and the control device thereof are described as independent devices from the photochromic lens manufacturing device 500, however, these devices may also be configured as an optical surface forming unit of the photochromic lens manufacturing device 500, so as to be used as one manufacturing device. In such a case, the optical surface forming unit may not be provided with the concave-side data storage section 551, and data may be directly transmitted from the data storage unit 510 to the optical surface forming control device 552. Further, the optical surface forming control device 552 may be included in the control unit 501, so that the control signals may be directly outputted from the control unit 501 to the optical surface creating device 553 and the optical surface polishing device 554 of the optical surface forming unit. With such a configuration, since it is possible to share the concave-side data storage section 551 within the data storage unit 510 and share the optical surface forming control device 552 within the control unit 501, data processing can be simplified.

After the concave-side optical surface has been formed, the lens substrate 1 is transferred back to the photochromic lens manufacturing device 500 to form the hard film.

First, based on the substrate material data stored in the data storage unit 510, the second film forming control device 503 for controlling the film forming of the hard film derives a coating liquid (i.e., a hard coat liquid) possible to be used to form a film having a refractive index near to that of the substrate. The derived hard coat liquid is selected or prepared by the hard film forming device 540 or the operator. Further, the hard film is formed by the coating device included in the hard film forming device 540.

The setting of the condition of the coating and the control of the hard film forming device 540 are performed by the second film forming control device 503. If a dipping method is used by the coating device included in the hard film forming device 540, the second film forming control device 503 sets the dipping time of the lens substrate, the drawing speed, the drying condition, the curing condition and the like, and controls the hard film forming device 540 based on the set conditions. If a spin-coating method is used by the coating device, the second film forming control device 503 sets the coating liquid feeding condition and the rotation condition during coating, the drying condition, the curing condition and the like, and controls the hard film forming device 540 based on the set conditions.

Incidentally, it is preferred that the transfer of the lens substrate between the respective devices is automatically performed according to the control signals from the control unit 501. In such a case, it is preferred that the lens substrate is automatically transferred from a lens substrate transferring device (separately provided and not shown in the drawings) to the photochromic film forming device 530 of the surface treatment unit 501, and automatically transferred from the photochromic film forming device 530 to the optical surface creating device 553 or optical surface polishing device 554 of the optical surface forming device 550 (or the optical surface forming unit). Further, it is preferable that the transfer of the lens substrate from the optical surface creating device 553 or optical surface polishing device 554 to the hard film forming device 540, or the transfer of the lens substrate between the respective devices is automatically performed; it is more preferable that the lens substrate transferring means is provided between each two of the devices.

With the photochromic lens manufacturing device 500 having the aforesaid configuration, the selection of the lens substrate, the formation of the photochromic film, the formation of the hard film can be performed even by an operator having no particular knowledge about the coating of the photochromic film and the like. Further, even in the case where a semi-finished lens is selected as the lens substrate, the formation of the photochromic film, the formation of the optical surface, and the formation of the hard film can be performed as a series of consecutive steps; or a photochromic lens can be manufactured by performing the formation of the photochromic film, the formation of the optical surface, and the formation of the hard film as a series of consecutive steps.

### 3. Embodiment of photochromic lens manufacturing method

Next, a photochromic lens manufacturing method according to an embodiment of the present invention will be described below.

### [1] Material of photochromic lens

First, the materials of the lens substrate, the photochromic film and the hard film applicable to the photochromic lens manufacturing method of the present invention will be described below.

### (1) Lens substrate

Examples of the lens substrate applicable to the photochromic lens manufacturing method of the present invention include finished lens and semi-finished lens. In these examples, the semi-finished lens is not particularly limited as long as only one surface (the surface on the convex side, for example) thereof is formed into an optical surface, and the other surface (the surface on the concave side, for example) thereof can be formed into an optical surface. For both the finished lens and the semi-finished lens, the material, the manufacturing method and the like of the lens substrate are not particularly limited, but can be suitably selected according to prescription of the order.

Examples of the material of the lens substrate include copolymer of methyl methacrylate and at least one other monomer, copolymer of diethylene glycol bisallyl carbonate and at least one other monomer, copolymer of polyurethane and polyurea, polycarbonate, polystyrene, polyvinyl chloride, unsaturated polyester, polyethylene terephthalate, polyurethane, polythiourethane, sulfide resin obtained by utilizing an ene-thiol reaction, sulfur-containing vinyl polymer and the like. Various kinds of additives may be added into these materials according to necessity. Further, injection molding, cast molding and the like can be selected as the forming method of the semi-finished lens in accordance with the material.

### (2) Coating liquid of photochromic film

The photochromic film is formed by coating a coating liquid containing photochromic pigment onto one surface of the lens substrate (for example, the convex-side surface of the finished lens or the semi-finished lens) and curing the coated liquid.

The coating liquid may be composed of curable component, photochromic pigment, polymerization initiator, and additives arbitrarily added. The coating liquid is not limited to be prepared by a particular preparation method, but can be prepared by measuring off a predetermined amount of each component, and mixing up the respective components. Incidentally, the order of adding the respective components is not particularly limited. For example, the all components may be added at the same time, or monomer component may be previously mixed and then the photochromic pigment and other additives are added and mixed immediately before polymerization.

It is preferred that the viscosity of the coating liquid is 20cp to 500cp at 25°C, more preferred that the viscosity of the coating liquid is 50cp to 300cp, and particularly preferred that the viscosity of the coating liquid is 60cp to 200cp. By controlling the viscosity in this range, the coating liquid can be easily coated, and the photochromic film of the desired thickness can be easily obtained.

Details of each component of the coating liquid will be described below.

### (2-1) Curable component

The curable component possible to be used for forming the photochromic film is not particularly limited. Examples of the material of the curable component include known photopolymerizable monomer and oligomer having radical polymerizable group such as (meth)acryloyl group, (meth)acryloyloxy group, vinyl group, allyl group, styryl group, and prepolymers of the photopolymerizable monomers and oligomers. Among these compounds, the compound having acryloyl group or (meth)acryloyloxy group (as the radical polymerizable group) is preferably used due to their availability and good curability. Incidentally, the "(meth)acryloyl group" represents both the acryloyl group and the methacryloyl group.

The components described in Japanese Unexamined Patent Application Publication No. 2008-33223, Japanese Unexamined Patent Application Publication No. 2007-77327 and the like can be used as concrete curable component.

### (2-2) Photochromic pigment compound

The photochromic pigment compound can be a known photochromic pigment compound. Examples of the photochromic pigment compound include fulgimide compound, spirooxazine compound, chromene compound and the like, and in the present invention, these photochromic pigment compounds can be used without particular limitation.

For example, the compounds described in Japanese Unexamined Patent Application Publication No. H02-28154, Japanese Unexamined Patent Application Publication No. S62-288830, description of WO94/22850, description of WO96/14596 and the like can be preferably used as the aforesaid fulgimide compound, spirooxazine compound, chromene compound.

For example, the compounds described in Japanese Unexamined Patent Application Publication No. 2001-114775, Japanese Unexamined Patent Application Publication No. 2001-031670, Japanese Unexamined Patent Application Publication No. 2001-011067, Japanese Unexamined Patent Application Publication No. 2001-011066, Japanese Unexamined Patent Application Publication No. 2000-347346, Japanese Unexamined Patent Application Publication No. 2000-344762, Japanese Unexamined Patent Application Publication No. 2000-344761, Japanese Unexamined Patent Application Publication No. 2000-327676, Japanese Unexamined Patent Application Publication No. 2000-327675, Japanese Unexamined Patent Application Publication No. 2000-256347, Japanese Unexamined Patent Application Publication No. 2000-229976, Japanese Unexamined Patent Application Publication No. 2000-229975, Japanese Unexamined Patent Application Publication No. 2000-229974, Japanese Unexamined Patent Application Publication No. 2000-229973, Japanese Unexamined Patent Application Publication No. 2000-229972, Japanese Unexamined Patent Application Publication No. 2000-219687, Japanese Unexamined Patent Application Publication No. 2000-219686, Japanese Unexamined Patent Application Publication No. 2000-219685, Japanese Unexamined Patent Application Publication No. H11-322739, Japanese Unexamined Patent Application Publication No. H11-286484, Japanese Unexamined Patent Application Publication No. H11-279171, Japanese Unexamined Patent Application Publication No. H10-298176, Japanese Unexamined Patent Application Publication No. H09-218301, Japanese Unexamined Patent Application Publication No. H09-124645, Japanese Unexamined Patent Application Publication No. H08-295690, Japanese Unexamined Patent Application Publication No. H08-176139, Japanese Unexamined Patent Application Publication No. H08-157467 and the like can be preferably used as the compound having excellent photochromic property.

Among the examples of the photochromic pigment compound described above, the chromene photochromic pigment compound is preferably used due to its better photochromic durability, higher color density and higher fading rate of the photochromic property, compared with other photochromic pigment compounds. Further, among the chromene photochromic pigment compounds, the chromene photochromic pigment compound having a molecular weight of 540 or higher is preferably used due to its higher color density and higher fading rate of the photochromic property, compared with other chromene photochromic pigment compounds.

Further, it is preferred that material expressed by the following formula (1) is used as a chromene compound having particularly good photochromic properties such as color density, fading rate, photochromic durability and the like.

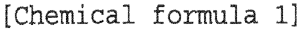

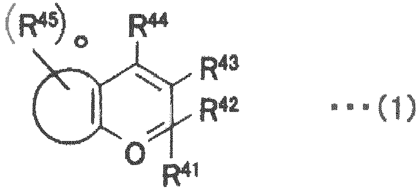

In formula 1, the group expressed by the following formula (2) is a substituted or unsubstituted aromatic hydrocarbon group, or a substituted or unsubstituted unsaturated heterocyclic group.

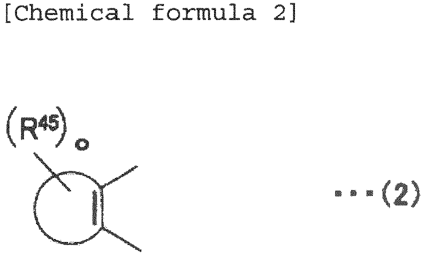

In formula (1), R⁴³, R⁴⁴, and R⁴⁵ are respectively and independently a hydrogen atom, an alkyl group, an alkoxyl group, an aralkoxy group, an amino group, a substituted amino group, a cyano group, a substituted or unsubstituted aryl group, a halogen atom, an aralkyl group, a hydroxyl group, a substituted or unsubstituted alkynyl group, a substituted or unsubstituted heterocyclic group having a nitrogen atom as a heteroatom that binds to a pyran ring or a ring of the group expressed by formula (2), or a condensation heterocyclic group generated by condensing an aromatic hydrocarbon ring or an aromatic heterocycle into the heterocyclic group. Further, "o" is an integer of 0 to 6.

In formula (1), R⁴¹ and R⁴² are respectively and independently a group expressed by the following formula (3), a group expressed by the following formula (4), a substituted or unsubstituted aryl group, a substituted or unsubstituted heteroaryl group, or an alkyl group, or R⁴¹ and R⁴² may together constitute an aliphatic hydrocarbon ring or an aromatic hydrocarbon ring. 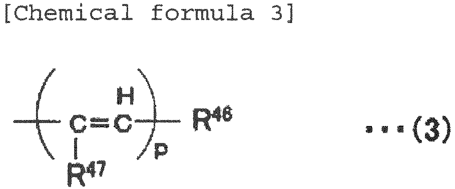 (where R⁴⁶ represents a substituted or unsubstituted aryl group, or a substituted or unsubstituted heteroaryl group, R⁴⁷ represents a hydrogen atom, an alkyl group, or a halogen atom, and p represents an integer of 1 to 3.) 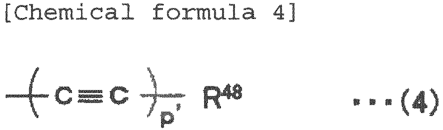 (where R⁴⁸ represents a substituted or unsubstituted aryl group, or a substituted or unsubstituted heteroaryl group, and p' represents an integer of 1 to 3.))

Incidentally, examples of the substituent of the substituted aryl group and the substituted heteroaryl group mentioned when describing formulas (3), (4), R⁴¹ and R⁴² include the same groups as R⁴³ to R⁴⁴.

Even in the chromene compounds expressed by formula (1), the compounds expressed by formulas (5) to (10) are particularly preferred to be used in view of photochromic properties (such as color density, fading rate and the like) and durability. 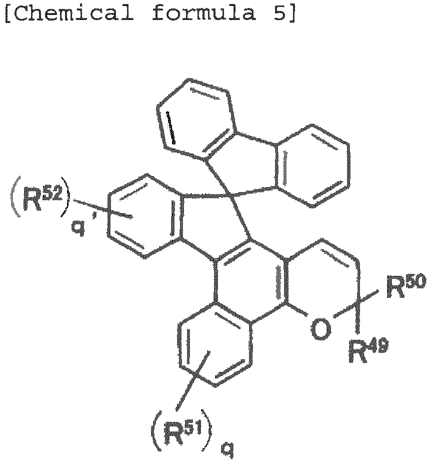 (where R⁴⁹ and R⁵⁰ are respectively identical to R⁴¹ and R⁴² of formula (1), R⁵¹ and R⁵² are identical to R⁴⁵ of formula (1), and q and q' are respectively an integers of 1 to 2) 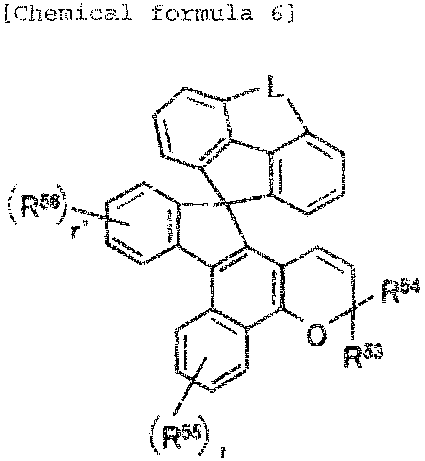 (where R⁵³ and R⁵⁴ are respectively identical to R⁴¹ and R⁴² of formula (1), R⁵⁵ and R⁵⁶ are identical to R⁴⁵ of formula (1), L represents either of the groups expressed by the following formulas, and r and r' are respectively and independently 1 or 2) 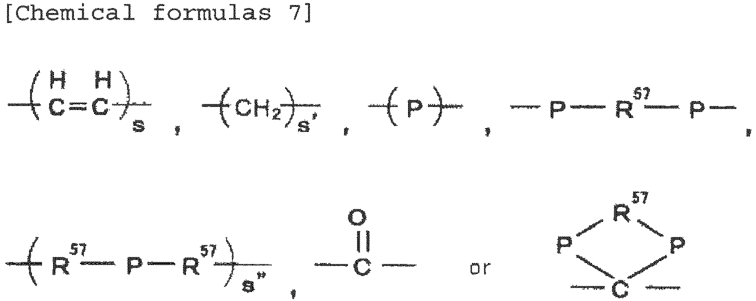 (Where P represents an oxygen atom or a sulfur atom, R⁵⁷ represents an alkylene group having 1 to 6 carbon atoms, s, s' and s" are each an integer of 1 to 4) 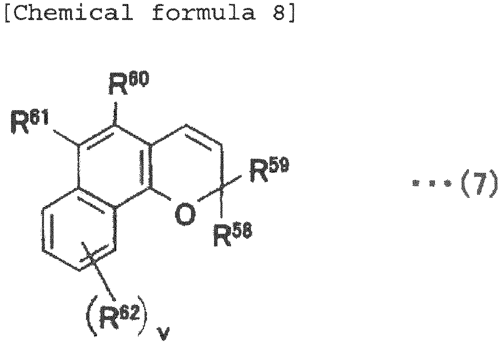 (where R⁵⁸ and R⁵⁹ are respectively identical to R⁴¹ and R⁴² of formula (1), R⁶⁰, R⁶¹ and R⁶² are each identical to R⁴⁵ of formula (1), and v is 1 or 2)) 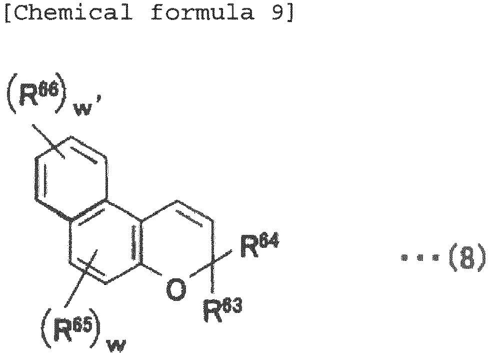 (where R⁶³ and R⁶⁴ are respectively identical to R⁴¹ and R⁴² of formula (1), R⁶⁵ and R⁶⁶ are each identical to R⁴⁵ of general formula (1), and w and w' are respectively and independently 1 or 2) 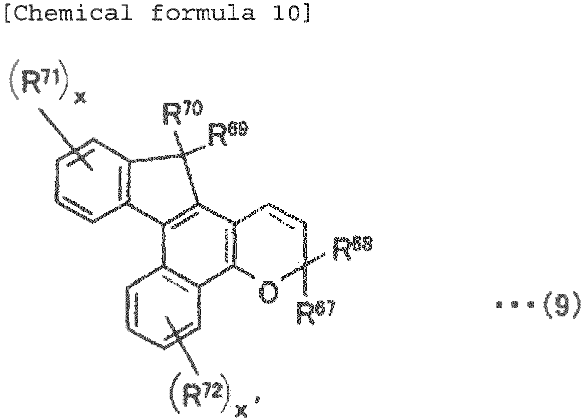 (where R⁶⁷ and R⁶⁸ are respectively identical to R⁴¹ and R⁴² of formula (1), R⁶⁹, R⁷⁰, R⁷¹ and R⁷² are each identical to R⁴⁵ of formula (1), and x and x' are respectively and independently 1 or 2) 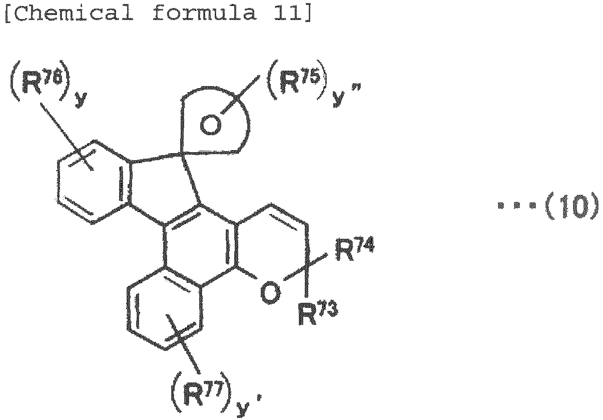 (where R⁷³ and R⁷⁴ are respectively identical to R⁴¹ and R⁴² of formula (1), R⁷⁵, R⁷⁶ and R⁷⁷ are each identical to R⁴⁵ of formula (1), and the portion expressed by the following formula represents an aliphatic hydrocarbon ring that may has at least one substituent, and y, y' and y" are respectively and independently 1 or 2)

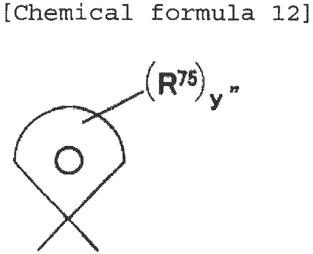

Among the chromene compounds expressed by formulas (5) to (10), a chromene compound having the following structure is particularly preferred.

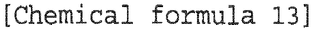

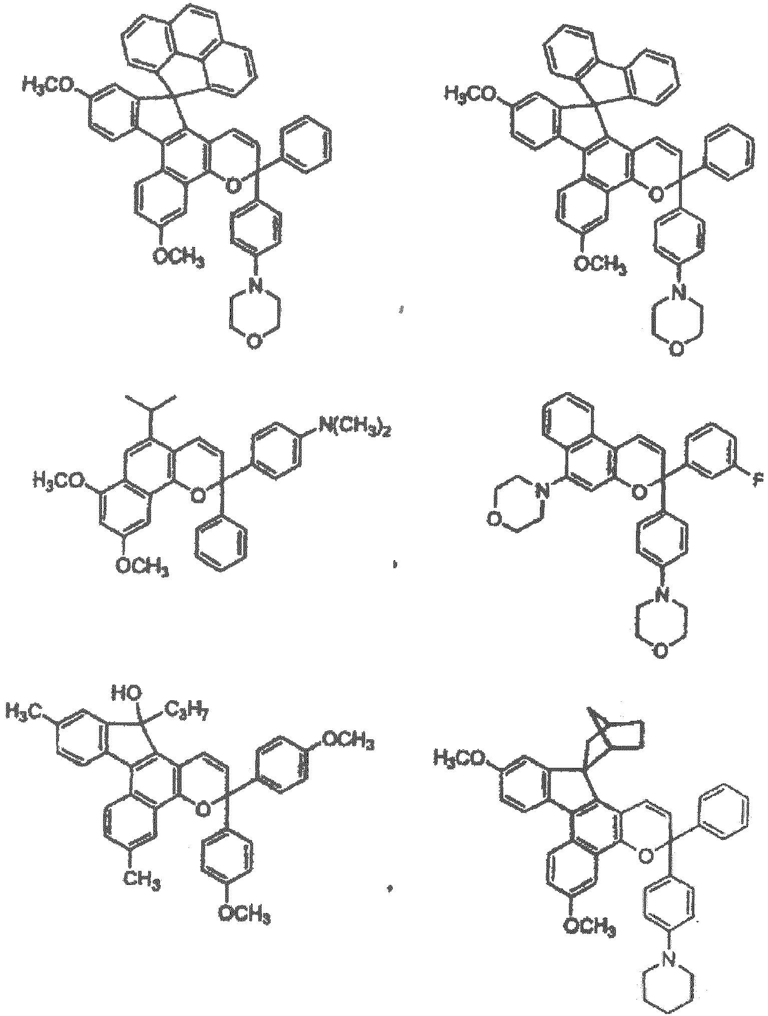

In order to find suitable color tone, these photochromic pigment compound can be used in suitable combination of two or more thereof. Content of the photochromic pigment compound based on the total amount of the curable composition is usually 0.01-20 pts. wt., preferably 0.1-10 pts. wt. based on 100 pts. wt. of the radical polymerizable monomer.

### (2-3) photopolymerization initiator

The photopolymerization initiator is not particularly limited. Examples of the photopolymerization initiator include benzoin, benzoin methyl ether, benzoin butyl ether, benzophenol, acetophenone, 4,4'-dichlorobenzophenone, diethoxyacetophenone, 2-hydroxy-2-methyl-1-phenylpropane-1-one, benzylmethylketal, 1-(4-isopropylphenyl)-2-hydroxy-2-methylpropane-1-one, 1-hydroxycyclohexyl phenyl ketone, 2-isopropylthioxanthone, bis(2,6-dimethoxybenzoyl-2,4,4-trimethyl-pentylphosphine oxide, bis(2,4,6-trimethylbenzoyl)-phenylphosphine oxide, 2,4,6-trimethylbenzoyldiphenyl-phosphineoxide, and 2-benzyl-2-dimethylamino-1-(4-morpholinophenyl)-butanone-1. Among these examples, 1-hydroxycyclohexyl phenyl ketone, 2-isopropylthioxanthone, bis(2,6-dimethoxybenzoyl-2,4,4-trimethyl-pentylphosphine oxide, bis(2,4,6-trimethylbenzoyl)-phenylphosphine oxide, 2,4,6-trimethylbenzoyldiphenyl-phosphineoxide are preferably selected.

These photopolymerization initiators can be used in suitable combination of two or more thereof. Content of the photopolymerization initiator of component (6) based on the total amount of the curable composition is usually 0.001-5 pts. wt., preferably 0.1-1 pts. wt. based on 100 pts. wt. of the radical polymerizable monomer.

Incidentally, in the case where curing is achieved by other method than photopolymerization, thermal polymerization initiatorfor, example, may be a diacyl peroxide, a peroxy ester, a percarbonate, an azo compound or the like. Examples of the diacyl peroxide include benzoyl peroxide, p-chlorobenzoyl peroxide, decanoyl peroxide, lauroyl peroxide, acetyl peroxide and the like; examples of the peroxy ester include t-butylperoxy-2-ethylhexanoate, t-butyl peroxydicarbonate, cumyl peroxydecanoate, t-butyl peroxybenzoate and the like; examples of the percarbonate include diisopropyloxy dicarbonate, di-2-ethylhexyl peroxydicarbonate, di-sec-butyl peroxydicarbonate and the like; examples of the azo compound include 2,2' azobisisobutyronitrile, 2,2' azobis(4-dimethylvaleronitrile), 2,2' azobis(2-methylbutyronitrile), 1,1' azobis(cyclohexane-1-Carbonitrile) and the like.

The amount of the thermal polymerization initiator to be used varies according to the polymerization condition, the type of the thermal polymerization initiator, and the type and composition of the polymerizable monomer. The amount of the thermal polymerization initiator to be used is usually controlled to 0.01-10 pts. wt. based on 100 pts. wt. of the total polymerizable monomer. The thermal polymerization initiator may be used by one kind alone, or two or more kinds of thermal polymerization initiators may be used in combination.

### (2-4) Additive

In order to improve the photochromic durability, the coloring rate, the fading rate and moldability, the liquid may further contain various additives such as surfactant, antioxidant, radical-capturing agent, ultraviolet stabilizer, ultraviolet absorber, mold release agent, color protection agent, antistat, fluorescent dye, dye, pigment, fragrance, plasticizer and the like. Known compounds may be used as these additives without any limitation.

Anionic surfactants, nonionic surfactants and cationic surfactants can be used as the aforesaid surfactant. However, considering the solubility to the coating liquid, it is preferred that a nonionic surfactant is used as the aforesaid surfactant.

A hindered amine light stabilizer, a hindered phenolic antioxidant, a phenolic radical-capturing agent, a sulfur antioxidant, a benzotriazole compound, a benzophenone compound and the like may be preferably used as the antioxidant, the radical-capturing agent, the ultraviolet stabilizer and the ultraviolet absorber. The antioxidant, the radical-capturing agent, the ultraviolet stabilizer and the ultraviolet absorber may also be use in combination of two or more thereof. Further, when using these nonpolymerizable compounds, the surfactant can be used in combination with the antioxidant, the radical-capturing agent, the ultraviolet stabilizer and the ultraviolet absorber.

Among the stabilizers, the hindered amine light stabilizer is preferred to be used from the standpoint of preventing deterioration of the photochromic pigment during curing process or improving durability of the obtained photochromic film. Known compounds may be used as the hindered amine light stabilizer without any limitation.

Further, in order to improve uniformity when forming film, it is preferred that surfactant, leveling agent and the like are added into the coating liquid, and it is particularly preferred that silicone leveling agent or fluorine leveling agent having leveling property is added into the coating liquid.

Further, in order to improve adhesion, an adherence agent such as a coupling agent or a polymerization catalyst of coupling agent may also be added into the coating liquid.

### (3) Photochromic film: foundation layer

It is preferred that a foundation layer is formed between the lens substrate and the photochromic film. The foundation layer can be formed by using polyurethane resin, polyester resin, epoxy resin, melamine resin, or polyurethane acrylate resin. The method for forming the foundation layer is not particularly limited. The foundation layer may be formed by preparing a coating liquid capable of forming the foundation layer, coating the coating liquid onto the convex surface of the lens substrate, and then curing the coated coating liquid. The coating method is not particularly limited. A dipping method or a spin method may be used as the coating method; however, since the photochromic film is formed on one surface only, it is preferred that a spin method, which can be used to form a film on one surface only, is used.

The thickness of the foundation layer is not particularly limited as long as the thickness is a value that improves the joining state between the convex surface of the lens substrate and the photochromic film. The film thickness is preferably set to 1µm to 20u, and more preferably set to 3um to 10µm. If the film thickness is less than 0.5um, adhesion between the photochromic film and the convex surface will be difficult to achieve. While if the film thickness exceeds 25um, the film structure including the photochromic film will be soft.

Further, a material layer composed of a silica-based inorganic material, an acrylic resin or the like may be formed in the lower layer or upper layer of the foundation layer (i.e., between the lens substrate and the foundation layer or between the foundation layer and the photochromic film). During the formation of the photochromic film by thermal polymerization or photopolymerization, there is a possibility that a part of components of the photochromic film material might be moved to the foundation layer and the lens substrate. Thus, a silica-based inorganic material layer capable of restraining such component moving may be formed before or after forming the foundation layer. Or an organic material layer, such as an acrylic resin layer, capable of absorbing such components may be formed. Since these materials, along with the foundation layer and the photochromic film, are formed as a series of steps, it is preferred that the film of these materials is formed by a coating method, such as a spin-coating method or the like, and the coated material is cured by heating, ultraviolet light irradiation or the like.

Further, the material layer, such as the silica-based inorganic material, the acrylic resin or the like, may also be formed after the photochromic film has been formed. A hard film, which is to be described later, is formed on the photochromic film. However, there is possibility the components with low molecular weight, such as light stabilizer and the like, in the photochromic film might be moved into the hard film during the polymerization process when forming the hard film. By forming the aforesaid material layer between the photochromic film and the hard film, it is possible to prevent such unnecessary components from being mixed into the hard film.

### (4) Hard film

In the present invention, a hard coat layer (as the hard film) is formed on the photochromic film. The material of the hard coat layer is not particularly limited, but can be a known coating liquid containing organosilicon compound and colloidal particle of metal oxide. The hard coat layer can be obtained by coating the coating liquid and then perform a curing process on the coating.

Examples of the organosilicon compound include, for example, an organosilicon compound represented the following formula (I) or a hydrolysate thereof.
[Chemical formula 14]

(R⁹¹)a' R⁹³)_{b'}Si (OR⁹²)₄₋(_{a'+b'})...... (I)

(where, R⁹¹ represents an organic group having glycidoxy group, epoxy group, vinyl group, methacryloxy group, acryloxy group, mercapto group, amino group, phenyl group and the like; R⁹² represents an alkyl group having 1 to 4 carbon atoms, an acyl group having 1 to 4 carbon atoms, or an aryl group having 6 to 10 carbon atoms; R⁹³ represents an alkyl group having 1 to 6 carbon atoms or an aryl group having 6 to 10 carbon atoms, and a' and b' respectively represent integers of 0 and 1.)

Examples of the alkyl group having 1 to 4 carbon atoms of R⁹² include, for example, linear or branched methyl group, ethyl group, propyl group, butyl group and the like.

Examples of the acyl group having 1 to 4 carbon atoms of R⁹² include, for example, acetyl group, propionyl group, oleyl, benzoyl group and the like.
Examples of the aryl group having 6 to 10 carbon atoms of R⁹² include, for example, phenyl group, xylyl group, tolyl group and the like.

Examples of the alkyl group having 1 to 4 carbon atoms of R⁹³ include, for example, linear or branched methyl group, ethyl group, propyl group, butyl group, pentyl group, hexyl group and the like.

Examples of the aryl group having 1 to 10 carbon atoms of R⁹³ include, for example, phenyl group, xylyl group, tolyl group and the like.

Examples of the colloidal particle of metal oxide include, for example, tungsten oxide (WO₃), zinc oxide (ZnO), silicon oxide (SiO₂), aluminum oxide (Al₂O₃), titanium oxide (TiO₂), zirconium oxide (ZrO₂), tin oxide (SnO₂), beryllium oxide (BeO), antimony oxide (Sb₂O₅) and the like. These metal oxides may be used along or in combination of two or more.

The coating liquid is usually coated on the photochromic film by, for example, dipping method, spin-coating method, spraying-coating method and the like. Among these methods, dipping method and spin-coating method are preferably used considering the viscosity of the composition and the surface accuracy. Particularly, in the case where a hard coat layer (as the hard film) is formed on the photochromic film and then an optical surface is formed in the other surface, it is preferred that a spin method, which can be used to form a film only on one surface, is used. Further, in the case where the optical surface is formed in the other surface before forming the hard film, it is preferred that a dipping method, which can be used to form a film on two surfaces, is used. The adhesion between the photochromic film and the hard coat layer can be improved by performing a chemical treatment, a physical treatment and a cleaning treatment before coating the coating liquid onto the photochromic film, wherein the chemical treatment can be performed with acid, alkali and/or various organic solvents; the physical treatment can be performed with plasma, ultraviolet irradiation, ozone and/or the like; and the cleaning treatment can be performed with various detergents.

Incidentally, a primer layer, which improves impact resistance, may be formed between the photochromic film and the hard coat layer. The material of the primer layer is not particularly limited but can be any material as long as impact resistance is improved without impairing the adhesion of the hard coat. Further, as described above, a material layer, such as a silica-based inorganic material, an acrylic resin or the like, may also be formed in the lower layer or upper layer of the primer layer, so that unnecessary components from the photochromic film can be prevented from being mixed into the primer layer.

### (5) Antireflection film

In the present invention, it is possible to form an antireflection film on the hard coat layer. The material and forming method of the antireflection film are not particularly limited. The antireflection film can be a single or multi-layered construction formed by a known inorganic oxide.

Examples of the inorganic oxide include, for example, silicon oxide (SiO₂), zirconium oxide (ZrO₂), aluminum oxide (Al₂O₃), niobium oxide (Nb₂O₅), yttrium oxide (Y₂O₃), and the like.

Further, an organic antireflection film having a single or multi-layered construction formed by an organosilicon compound and inorganic particulates may also be used, where the refractive index of the organic antireflection film is adjusted depending on the type of the inorganic particulates.

### [2] Forming method of photochromic film

A typical coatingf method, such as a spin-coating method, a spraying-coating method or the like, can be used to coat the coating liquid, which is composed by the aforesaid photochromic film material, onto one surface of the lens substrate (for example, the surface on the convex side). However, considering the viscosity of the composition and the surface accuracy, it is preferred that a spin-coating method is used as the coating method. Particularly, in the case where a spin-coating method as the coating method, the film thickness can be controlled with high accuracy, and, in the case where the coating liquid is coated on the lens substrate, since only one surface is coated, no coating liquid is wasted even if the other surface is optically polished.

It is preferred that the aforesaid foundation layer for improving adhesion and the aforesaid material layer for restraining movement of a part components of the photochromic film are formed before coating the coating liquid onto one surface of the lens substrate. Further, the convex surface may be subjected to a redox treatment, a chemical treatment, a physical treatment and a cleaning treatment to improve adhesion between the lens substrate and the photochromic film, wherein the redox treatment can be performed with acid, alkali, ozone and/or the like; the chemical treatment can be performed with various organic solvents; the physical treatment can be performed with plasma, ultraviolet irradiation and/or the like; and the cleaning treatment can be performed with various detergents.

The curing condition of the coating process is not particularly limited, but a known polymerization procedure can be used depending on the type of the used radical polymerizable monomer. Heating, irradiation of ultraviolet rays, α-rays, β-rays, γ-rays or the like, or combination of the both can be used as polymerization initiating means, and it is preferred that irradiation of ultraviolet rays is performed to cure the coating, and then heating curing is further performed.

Known light sources may be used as the light source for performing the ultraviolet curing without any limitation. Concrete examples of the light source include ultrahigh pressure mercury lamp, high pressure mercury lamp, low pressure mercury lamp, xenon lamp, carbon-arc lamp, germicidal lamp, electrodeless lamp and the like.

Further, irradiation time can be suitably determined according to the type of the ultraviolet photopolymerization initiator, the absorption wavelength, the sensitivity, the film thickness of the photochromic film, and the like.

Considering the color density, the durability, the heat-resisting property, and the uniformity of the film, it is preferred that the film thickness of the photochromic film is controlled in a range of 10µm to 100µm, and it is more preferred that the film thickness of the photochromic film is controlled in a range of 20µm to 50um.

### [3] Forming method of optical surface

The curved surface, the convex surface and the concave surface constituting the optical surfaces of the lens substrate may be created using a curve generator. The curve generator is an NC (numerical control) cutting device for creating a curved surface shape of an object-to-be-processed by moving a cutting blade along the curved surface shape of an object-to-be-created under control of a computer. For example, a grinding device described in Japanese Unexamined Patent Application Publication No.2004-82324 can be used as the cutting device. After the grinding process, a polishing process may be performed by a polishing device according to necessity.

For example, a polishing device including a holder, a polishing jig and a polishing pad may be used as the aforesaid polishing device, wherein the holder is adapted to hold an object-to-be-polished, the polishing jig has a flexible sheet expanded into a dome shape by fluid pressure, and the polishing pad is attached on the surface of the flexible sheet. Examples of such polishing device include the polishing device described in Japanese Unexamined Patent Application Publication No.2000-1177604 and the polishing device described in Japanese Unexamined Patent Application Publication No.2003-266287. In such device, the surface-to-be-polished of the object-to-be-polished is polished by the abrasive provided between the polishing pad and the surface-to-be-polished, wherein the holder is reciprocated right-and-left and back- and-forth while the polishing jig is oscillated and turned so that a trackless polishing locus is drawn in which polishing locus is slightly deviated for each turn. In such a polishing device, a balloon member is used as the polishing jig, for example, and polishing can be performed while changing the curvature of the dome by changing internal pressure of the balloon member. Thus, there is no need to provide perpendicular part or means to change the curvature of the dome according to the curvature of the surface-to-be-polished, so that number of the kinds of the polishing jig can be substantially reduced, and the surface-to-be-polished can be reliably polished.

Incidentally, the polishing device is not limited to the aforesaid configuration, but various other polishing devices can be used.

Incidentally, the optical surface forming step is performed after the photochromic film forming step, and in the case where the surface of the lens substrate opposite to the surface having the photochromic film formed thereon is being processed while the photochromic film is protected, it is preferred that the lens substrate is fixed by a lens holder or a fixture described in, for example, Japanese Unexamined Patent Application Publication No. 2003-334748, and the photochromic film side is fixed by a flexible sheet-like lens fixing member described in, for example, Japanese Unexamined Patent Application Publication No. 2004-330327, wherein the flexible sheet-like lens fixing member can be easily attached and detached.
Thus, by using the sheet-like fixing member capable of reducing the damage to the photochromic film, the processing of creating the other surface can be preferably performed without causing deformation and deterioration of the photochromic film. The holding method, the material and configuration of the holder and the like for protecting the surface having the photochromic film formed thereon used in the second optical surface forming step are not limited to the aforesaid examples, but can have other configuration as long as the photochromic film can be protected from being deformed and deteriorated.

### [4] Manufacturing process

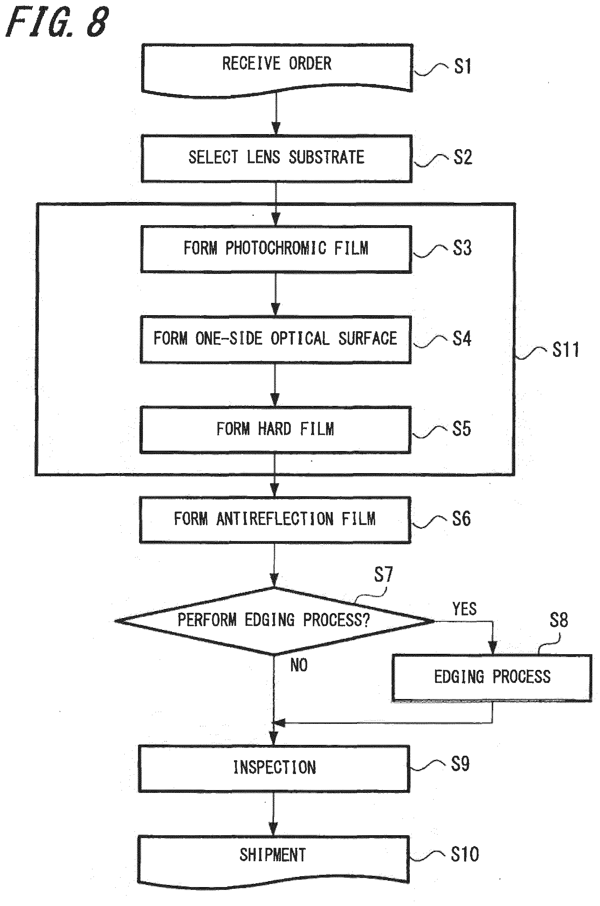

Next, the manufacturing process of the photochromic lens manufacturing method according to the present embodiment will be described below. FIG. 8 is a flowchart for explaining each step of the photochromic lens manufacturing method according to the present embodiment. Although described in the present embodiment is a case where, when forming a progressive-addition lens for example, the lens substrate to be used to manufacture the photochromic lens is a semi-finished lens that has one surface (for example, the surface on the convex side) formed into an optical surface and the other surface (for example, the surface on the concave side) unfinished, the present invention is not limited thereto. First, as shown in FIG. 8, an order for the photochromic lens is received (step S1), and the data of the received order is stored in the data storage unit 510 of the photochromic lens manufacturing device 500, which has been described with reference to FIG. 3. Next, a lens substrate is selected based on the optical surface data related to the optical surface and the data related to the lens substrate material among the data of the received order (step S2). Here, a plurality of semi-finished lenses are selected as the candidates for the lens substrate based on the data related to both optical surfaces; and from the plurality of semi-finished lenses, a lens substrate whose data of the finished optical surface meets the data of one optical surface of the received order is selected. Obviously, there may be the case where a finished lens might be selected depending on the order details.

Next, the photochromic film is formed onto the selected lens substrate (step S3). Details of the photochromic film forming step will be described later. If the lens substrate is a semi-finished lens, one-side optical surface is formed (step S4) after the photochromic film has been formed. A typical method and device for forming the optical surface of a plastic lens can be used to perform the aforesaid optical surface forming step; however, it is preferred that the surface having the photochromic film formed thereon is held by using aforesaid flexible sheet-like holder and the like. By using such holder, cutting and polishing can be preferably performed without causing deformation and deterioration of the photochromic film. During the procedure, it is not necessary to particularly cover the photochromic film with a protective film and the like. Incidentally, in the case where a finished lens is used as the lens substrate, the optical surface forming step is omitted.

After the optical surface forming step, the hard film is formed (step S5). In such a case, the hard film can be formed onto both the surface having the photochromic film formed thereon and the surface having the optical surface forming thereon. On the other hand, although not shown in the drawings, the hard film forming step may also be performed before the one-side optical surface forming step. In such a case, the hard film is only formed onto the surface having the photochromic film formed thereon, i.e., the convex surface on the outer side of the spectacle lens. Later, in such a case, a hard film (such as a hard coat) may be further formed onto concave surface. Further, as described above, it is preferred that, before the hard film forming step, a primer layer for improving adhesion and a material layer for preventing the components of the photochromic film material from being mixed into the hard film are formed.

The photochromic lens film forming process is completed by performing the above steps S1 to S5. In the present embodiment, among steps S1 to S5, the steps from the photochromic film forming step (step S3) to the hard film forming step (step S5) through the one-side optical surface forming step (step S4) are performed as a series of consecutive steps S11.

Thereafter, the antireflection film is formed using the aforesaid various materials (step S6), and it is determined whether an edging process for fitting the lens into a spectacle frame or the like, for example, should be performed (step S7). If the edging process is to be performed ("Yes" in step S7), the processing will proceed to an edging process step (step S8). If the edging process is not performed ("No" in step S7), the processing will proceed to a pre-shipment inspection step (step S9), and thereafter the lens will be shipped (step S10), i.e., the lens will be supplied to the orderer as finished product. In the case where the orderer 100 shown in FIG. 1 is provided with the lens processing equipment 200, the aforesaid series of steps may be performed on the side of the orderer 100.

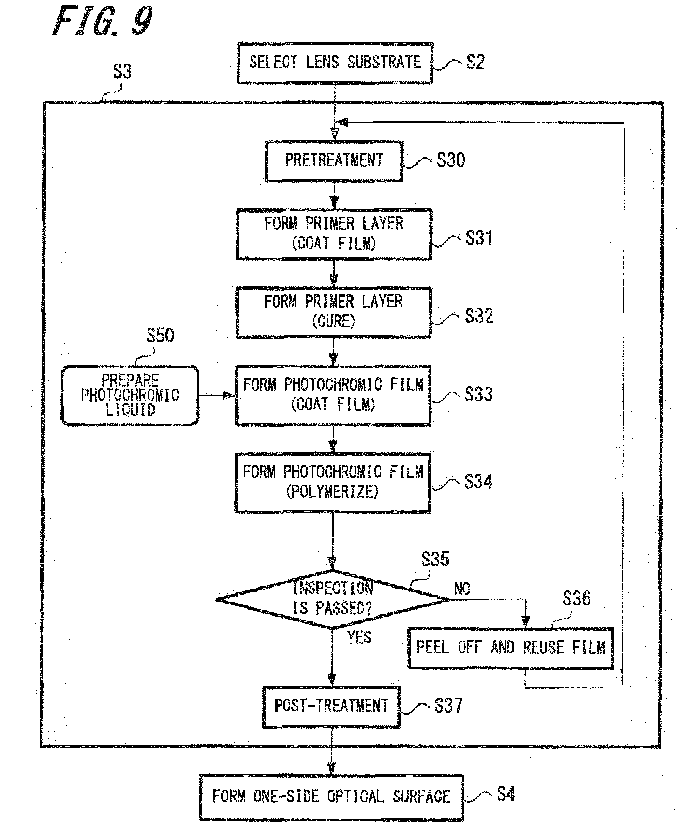

Next, the photochromic film forming step (step S3) of the photochromic lens manufacturing method according to the present embodiment will be described in detail below with reference to FIG. 9.

In such a case, as shown in FIG. 9, after the lens substrate has been selected (step S2), a pretreatment for forming the photochromic film is performed (step S30). Examples of the pretreatment include, for example, wiping off dirt on the surface of the lens substrate, cleaning, cooling the lens substrate and the like. As the pretreatment, various other kinds of treatments may be added for improving the adhesion of the photochromic film and primer layer, and the like. For example, a treatment of forming a material layer of silica or acrylic resin may be formed for preventing a part of components of the photochromic film material from being mixed into the lens substrate. Next, in the case where the primer layer (which is the foundation layer of the photochromic film) is to be formed, the primer layer material liquid is coated by a spin-coating method or the like to form a film (step S31), and then a curing process by heating or the like is performed for the primer layer (step S32). Incidentally, the coating step and curing step of the primer layer may also be omitted. Further, in the case where the primer layer is to be formed, the treatment of forming a material layer for restraining the movement of a part of the components of the photochromic film material may also be performed after the curing process of the primer layer.

On the other hand, apart from the flow of the aforesaid steps, the photochromic liquid for forming the photochromic film is separately prepared (step S50), wherein the photochromic film is composed of the material selected from the aforesaid various materials according to the received order. Further, the prepared photochromic liquid is coated onto the primer layer, or coated onto the lens substrate, if no primer layer is formed, by a spin-coating method (step S33). Thereafter, the photochromic film is formed by ultraviolet irradiation, heating or the like. In other words, the coated material is polymerized and cured (step S34).

Thereafter, inspection of the photochromic film is performed (step S35). The inspection may be performed by irradiating ultraviolet light and visually confirming coloring state and fading state, or by measuring spectral transmittance characteristics and the like. If the inspection is failed ("No" in step S35), it is preferred that the photochromic film is peeled off and re-used, for example (step S36). The photochromic film can be peeled off by various methods such as alkali cleaning.

While if the inspection is passed ("Yes" in step S35), a heating process is performed as post-treatment (step S37), and thereby the photochromic film forming step (step S3) is completed. Thereafter, the process proceeds to the optical surface forming step (step S4 in FIG. 8) if the semi-finished lens is used, or proceeds to the hard film forming step (step S5 in FIG. 8) if the finished lens is used.

The photochromic film forming step described above is just an example. As described above, the primer layer forming step may be omitted, and also, other steps associated with photochromic film performance itself may be added.

It is possible to manufacture a photochromic lens having stable performance by subsequently performing a one-side optical surface forming step or a hard film forming step after the photochromic film forming step.

### 4. Examples and comparative examples

Next, results of the evaluation performed on the photochromic lens manufactured by the photochromic lens manufacturing method according to the present invention will be described below.

### (1) Evaluation on change of curvature radius of lens substrate and lens substrate having a photochromic film formed thereon

In this example, as the lens substrate, two lens substrates having a refractive index of 1.669 (EYNOA, manufactured by Hoya Corporation) are prepared, wherein one lens substrate has a concave-side optical surface formed thereon without forming a photochromic film, and the other lens substrate has a concave-side optical surface formed thereon after forming a photochromic film, and then a hard film is formed subsequently. The diameter of the lens substrate is 80 mm, and the base curve BC of the lens substrate is 0.80. Incidentally, the material and forming condition of the photochromic film are the following.

### (A) Preparation of photochromic coating liquid

In a plastic container, 1.5 to 6 pts. mass (for example, 3 pts. mass) of a chromene compound as photochromic dye, 5 pts. mass of a light stabilizer LS765 (bis(1,2,2,6,6-pentamethyl-4-pyperidyl) sebacate, methyl(1,2,2,6,6-pentamethyl-4-pyperidyl) sebacate), 5 pts. mass of a hindered phenol antioxidant (Irganox (trademark) 245, manufactured by BASF), and 0.8 pts. mass of an ultraviolet polymerization initiator (CGI-1870, manufactured by BASF) were added into 100 pts. mass of a radical polymerizable monomer with sufficient stirring to obtain a composition, wherein the radical polymerizable monomer contained 20 pts. mass of trimethylolpropane trimethacrylate, 35 pts. mass of BPE oligomer (2,2-bis(4-methacryloyloxypolyethoxyphenyl) propane), 10 pts. mass of EB6A (polyester oligomer hexaacrylate), 10 pts. mass of polyethylene glycol diacrylate having an average molecular weight of 532, and 10 pts. mass of glycidyl methacrylate.

Thereafter, 3 pts. mass of γ-methacryloyloxypropyl trimethoxysilane (KBM503, manufactured by Shin-Etsu Chemical Co., Ltd.) and 3 pts. mass of γ-glycidoxypropyltrimethoxysilane (KBM403, manufactured by Shin-Etsu Chemical Co., Ltd.) were dropped into the obtained composition with stirring.

Thereafter, 2 pts. mass of N-methyldiethanolamine, which is an amine catalyst, and 0.1 pts. mass of polyoxyalkylene dimethylpolysiloxane copolymer (Y-7006, manufactured by NIPPON UNICAR Co., Ltd.), which is a silicone-based leveling agent, were added and mixed, and then the result was degassed by a rotation-and-revolution-type agitating and degassing device (AR-250, manufactured by THINKY Corporation) for 2 minutes, and thereby preparation of a coating liquid having photochromic property was completed.

### [B] Formation of photochromic film

The curable composition prepared by the process (A) described above was coated on the primer layer of the lens substrate by a spin-coating method. The spin-coating was performed by the method described in Japanese Unexamined Patent Application Publication No. 2005-218994 (i.e., a coating method using a coating device having a spin holder for holding lens material and a dispenser for dispensing coating liquid).

Thereafter, the lens was irradiated by an ultraviolet light having a wavelength of 405 nm (irradiated from a UV lamp (D bulb) manufactured by Fusion) in a nitrogen atmosphere (with oxygen concentration of 500 ppm or less). Integrating quantity of light was 1800mJ/cm² (100mW/cm², 3 minutes). Then the lens was further cured at 100 °C for 90 minutes and thereby the photochromic film was formed.

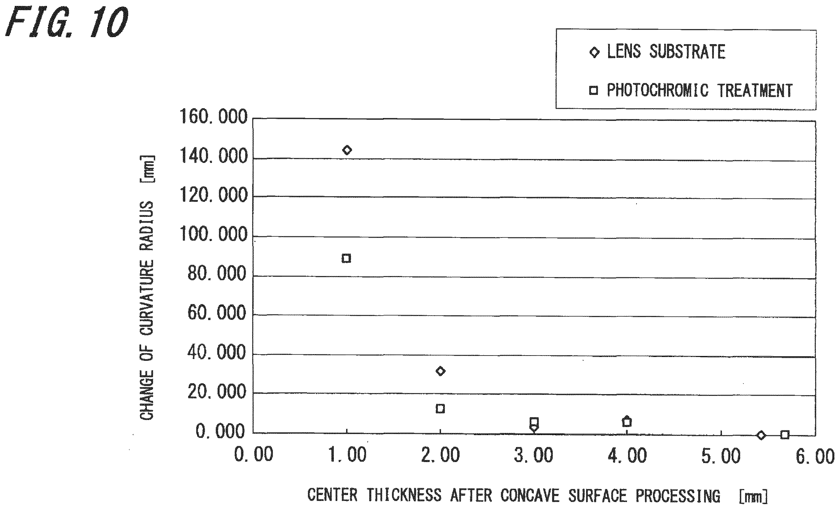

Change of curvature radius with respect to the center thickness after concave surface processing was measured for both the lens substrate having the photochromic film formed thereon and the lens substrate having no photochromic film formed thereon. The result is shown in FIG. 10. The measurement was performed using a reflective lens meter (FOCOVISIONSR-1) .

It is known from FIG. 10 that the smaller the center thickness after concave surface processing is (i.e., the thinner the central portion is), the larger the change of the curvature becomes. However, it is known that, in the case where the photochromic lens is manufactured by the photochromic lens manufacturing method according to the present invention, the change of the curvature radius is restrained compared with the lens having no photochromic film formed thereon. Thus, it is known that there is no problem with the change of the curvature of the photochromic lens manufactured according to the present invention.

### (2) Evaluation by storage promotion test

Next, change of color coordinates was measured with respect to the photochromic lenses manufactured using two kinds of materials (brown and gray) as the photochromic pigment of the coating liquid respectively for the state immediately after the photochromic film and the hard film had been formed, the state after a promotion test had been performed by storing the lens for two weeks since the photochromic film and the hard film had been formed, and for the state after a promotion test had been performed by storing the lens for four weeks since the photochromic film and the hard film had been formed, wherein the promotion test was performed under an environment of: storage condition was 40°C, and relative humidity was 90%RH.

The measurement results of luminous transmittance, YI value, L*, a*, b* of each example of the brown photochromic lens and gray photochromic lens are respectively shown in table 1 and table 2.

**[Table 1]**

| Time | Luminous transmittance [96] | YI | L^{∗} | a^{∗} | b^{∗} |
|---|---|---|---|---|---|
| Immediately after film is formed | 32.77 | 46 02 | 63.98 | 4.40 | 1703 |
| Storage promotion for 2 weeks | 32.08 | 56.51 | 63.41 | 7.25 | 20.43 |
| Storage promotion for 4 weeks | 32.96 | 61.86 | 64.13 | 8.14 | 22.90 |

**[Table 2]**

| Time | Luminous transmittance [%] | YI | L^{∗} | a^{∗} | b^{∗} |
|---|---|---|---|---|---|
| Immediately after film is formed | 22.26 | -32.75 | 54.30 | 2.93 | -10.82 |
| Storage promotion for 2 weeks | 21.70 | -1 8.21 | 53.71 | 5.14 | -7.50 |
| Storage promotion for 4 weeks | 21.87 | -9.74 | 53.89 | 544 | -5.18 |

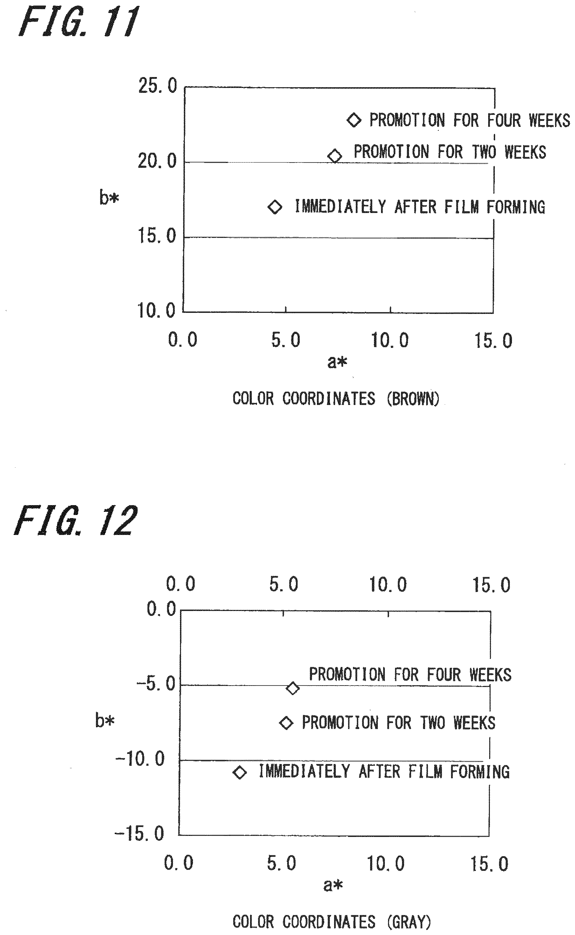

Further, the change of color coordinates of the brown photochromic lens and the change of color coordinates of the gray photochromic lens are respectively shown in FIGS. 11 and 12.

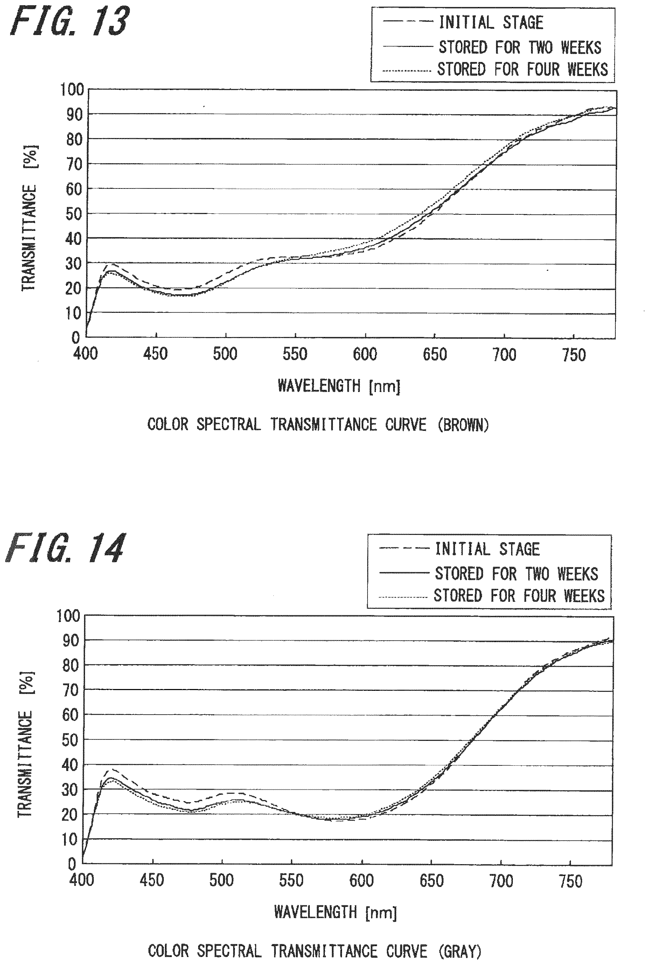

Color spectral transmittance curve under the same storage promotion condition was measured. The measurement result of the brown photochromic lens is shown in FIG. 13, and the measurement result of the gray photochromic lens is shown in FIG. 14. From FIGS. 11, 12, 13 and 14, the difference of the color tone can be known by comparing the lens immediately after being manufactured with the lens manufactured four weeks ago. Thus, if two lenses with different manufacturing date and time are fitted into one frame as a pair, subtle difference in color tone of the lenses fitted into the frame will give bad impression, therefore causing disfigurement. In order to restrain the subtle difference in color tone, the lenses need to be, for example, specially packed and stored under strict temperature and humidity management. However, such problem will not occur in the case where the lens is manufactured by the photochromic lens manufacturing method according to the present invention.

As described above, by the photochromic lens manufacturing system, the photochromic lens manufacturing device and the photochromic lens manufacturing method according to the present invention, it is possible to manufacture a photochromic lens of a received order within shorter time than conventional art by forming a photochromic film on the lens substrate then forming a hard film by a series of consecutive steps, or by forming a photochromic film on the lens substrate then forming an optical surface and forming a hard film by a series of consecutive steps. Further, by forming a photochromic film on the lens substrate then forming a hard film by a series of consecutive steps, or by forming a photochromic film on the lens substrate then forming an optical surface and forming a hard film by a series of consecutive steps, it is possible to omit unnecessary treatment such as providing a protecting film when shipping the photochromic lens in the stage of forming the photochromic film. Furthermore, since it is not necessary to store the lens substrates having a photochromic film formed thereon within the lens manufacturer, it is possible to reduce or eliminate labor, cost, equipment investment and the like for storing the photochromic lenses in order to supply these lenses, which are relatively less ordered compared to normal lenses, rapidly. Thus, cost can be reduced. Further, it is not necessary to provide a protective film or a special package for avoiding physical influence during shipment when dyeing is done by other manufacturer, so that cost for this purpose can be reduced.

Further, since it is possible to manufacture two photochromic lenses for been fitted into one frame at the same date and time, situation that two lenses have different color tones will never occur. Further, no difference will be caused in photochromic time associated with color developing and color fading between the two photochromic lenses. Thus, it is possible to fit two lenses having equal color tone and equal photochromic property into one frame, so that aesthetic appeal can be maintained.

Incidentally, the present invention is not limited to the examples of the aforesaid embodiments. For example, the present invention may also be applied to cases where other film(s) such as a water-repellent film is provided in addition to the photochromic film, the hard film and the antireflection film, and the present invention includes various modifications and variations

### Explanation of Reference Numerals

- 1: lens substrate
- 2: surface-to-be-coated
- 3: rear surface
- 100: orderer
- 101: orderer side computer
- 200: lens manufacturer
- 201: manufacturer side computer
- 202: photochromic film forming device
- 203: hard film forming device
- 204: optical surface forming device
- 300: communication line
- 500: photochromic lens manufacturing device
- 501: control unit
- 502: first film forming control device
- 503: second film forming control device
- 550: optical surface forming device
- 510: data storage unit
- 511: optical surface data storage section
- 512: lens substrate data storage section
- 513: photochromic data storage section
- 520: surface treatment unit
- 530: photochromic film forming device
- 540: hard film forming device
- 550: optical surface forming device
- 541: concave-side data storage section
- 542: optical surface forming control device
- 543: optical surface creating device
- 544: optical surface polishing device

## Claims

1. A method for manufacturing a photochromic lens using a photochromic lens manufacturing device (500), the method comprising:
- inputting surface treatment data to a data storage unit (510), the surface treatment data including: optical surface data related to optical surfaces of a lens to be manufactured, lens substrate data related to lens substrate material, and photochromic data at least related to a photochromic film;
- forming a hard film and a photochromic film on a lens substrate using a surface treatment unit (520) including a photochromic film forming means and a hard film forming means, wherein the hard film forming means forms a hard film, and the photochromic film forming means forms, based on the photochromic data, a photochromic film on a lens substrate (1) , the lens substrate (1) being selected based on the optical surface data and the lens substrate data, the lens substrate (1) having an optical surface formed on at least the convex-side thereof; and
- setting a film forming condition of the photochromic film and of the hard film using a control unit (501) including a first film forming control device (502) and a second film forming control device (503), wherein the first film forming control device (502) is setting a film forming condition of the photochromic film based on the optical surface data, the lens substrate data and the photochromic data, and the second film forming control device (503) is setting a film forming condition of the hard film based on the lens substrate data,
wherein at least either of color and density is included in the photochromic data, and
wherein, as the film forming condition of the photochromic film, the first film forming control device (502) selects at least either of the type of the photochromic liquid corresponding to the color of the photochromic film and the thickness of the coated film corresponding to the density of the photochromic film, and outputs the selected data to the photochromic film forming means.

2. A photochromic lens manufacturing device (500) comprising:
a data storage unit (510) to which surface treatment data is input, the surface treatment data including: optical surface data related to optical surfaces of a lens to be manufactured, lens substrate data related to lens substrate material, and photochromic data at least related to a photochromic film;
a surface treatment unit (520) including a photochromic film forming means and a hard film forming means, wherein the hard film forming means is adapted to form a hard film, and the photochromic film forming means is adapted to form, based on the photochromic data, a photochromic film on a lens substrate (1), the lens substrate (1) selected based on the optical surface data and the lens substrate data, the lens substrate (1) having an optical surface formed on at least the convex-side thereof; and
a control unit (501) including a first film forming control device (502) and a second film forming control device (503), wherein the first film forming control device (502) is adapted to set a film forming condition of the photochromic film based on the optical surface data, the lens substrate data and the photochromic data, and the second film forming control device (503) is adapted to set a film forming condition of the hard film based on the lens substrate data,
wherein at least either of color and density is included in the photochromic data, and
wherein, as the film forming condition of the photochromic film, the first film forming control device (502) selects at least either of the type of the photochromic liquid corresponding to the color of the photochromic film and the thickness of the coated film corresponding to the density of the photochromic film, and outputs the selected data to the photochromic film forming means.

3. The photochromic lens manufacturing device (500) according to claim 2,
wherein the photochromic film forming means includes a rotatable frame adapted to mount the lens substrate (1) with a surface-to-be-coated (2), which is an optical surface onto which the photochromic film is to be formed, facing upward, and a dropping means adapted to drop a photochromic liquid from a nozzle onto the surface-to-be-coated (2),
wherein the optical surface data includes curve data related to curve of the curved surface of the optical surface, and dimension data related to the outside dimension of the optical surface, and
wherein the first film forming control device (502) controls the distance between the surface-to-be-coated (2) and the nozzle based on the curve data, and controls the movement trajectory of the nozzle based on the dimension data.

4. The photochromic lens manufacturing device (500) according to any one of claims 2 to 3, further comprising an optical surface forming unit (550) adapted to form a concave-side optical surface of the lens substrate,
wherein the optical surface data includes concave-side optical surface forming data, and
wherein the control unit (501) controls an optical surface forming control device (542) of the optical surface forming unit (550) based on the lens substrate data and the concave-side optical surface forming data.

5. A photochromic lens manufacturing program comprising instructions for causing the device of claim 2 to execute the method of claim 1.

6. A recording medium having stored thereon the computer program of claim 5.

7. A photochromic lens manufacturing system having an orderer side computer (101) and a manufacturer side computer (201) connected with each other through a communication line (300), and adapted to manufacture a photochromic lens using a photochromic film forming device (202) and a hard film forming device (203) arranged on the manufacturer side and controlled by the manufacturer side computer (201),
wherein the orderer side computer (101) is configured to transmit the following data to the manufacturer side computer (201) through the communication line (300): lens substrate data related to substrate material of the lens, optical surface data related to optical surfaces of the lens, data related to a photochromic film, and data related to a hard film,
wherein the manufacturer side computer (201) comprises:
a lens substrate selecting means adapted to select a lens substrate (1) having a suitable optical surface formed in a suitable lens substrate material based on the lens substrate data and the optical surface data received from the borderer side computer;
a photochromic film forming data selecting means adapted to select at least forming data of the photochromic film based on the data related to the photochromic film, and output the selected data to the photochromic film forming device (202); and
a hard film forming data selecting means adapted to select at least forming data of the hard film based on the data related to the hard film, and output the selected data to the hard film forming device (203);
wherein the photochromic film forming device (202) is configured to form the photochromic film on the lens substrate (1), based on the data related to the photochromic film input from the manufacturer side computer (201), and wherein the hard film forming device (203) is configured to form the hard film on the lens substrate (1) based on the data related to the hard film input from the manufacturer side computer (201),
wherein at least either of color and density is included in the data related to the photochromic film, and
wherein the photochromic film forming data selecting means of the manufacturer side computer (201) is configured to select, as the forming data of the photochromic film, at least either of the type of photochromic liquid corresponding to the color of the photochromic film and the thickness of coated film corresponding to the density of the photochromic film, and outputs the selected data to the photochromic film forming device (202).

8. The photochromic lens manufacturing system according to claim 7, further comprising an optical surface forming, device adapted to form an optical surface on the surface of the lens substrate (1) other than the surface having the photochromic film formed thereon,
wherein the manufacturer side computer (201) further includes an optical surface forming data selecting means adapted to select optical surface forming data from the optical surface data, and output the selected data to the optical surface forming device (204).

9. The photochromic lens manufacturing system according to any one of claims 7 to 8, further comprising a lens substrate storage device (221) adapted to store a plurality of types of lens substrates (1),
wherein the lens substrate selecting means of the manufacturer side computer (201) outputs data related to the type of the selected lens substrate (1) to the lens substrate storage device (221), and
wherein the lens substrate storage device (221) has a transfer means adapted to select the lens substrate fitting the data related to the type of the lens substrate, and transfer the selected lens substrate (1) to the photochromic film forming device (202).

## Patentansprüche

1. Verfahren zur Herstellung einer photochromen Linse unter Verwendung einer Photochromlinsenherstellungsvorrichtung (500), wobei das Verfahren umfasst:
- Eingeben von Oberflächenbehandlungsdaten in eine Datenspeichereinheit (510), wobei die Oberflächenbehandlungsdaten optische Oberflächendaten umfassen, die sich auf optische Oberflächen einer herzustellenden Linse beziehen, Linsensubstratdaten, die sich auf ein Linsensubstratmaterial beziehen, und Photochromdaten, die sich wenigstens auf einen photochromen Film beziehen;
- Erzeugen eines harten Films und eine photochromen Films auf einem Linsensubstrat unter Verwendung einer Oberflächenbehandlungseinheit (520), umfassend eine Photochromfilmerzeugungseinrichtung und eine Hartfilmerzeugungseinrichtung, wobei die Hartfilmerzeugungseinrichtung einen harten Film erzeugt, und die Photochromfilmerzeugungseinrichtung basierend auf den Photochromdaten einen photochromen Film auf einem Linsensubstrat (1) erzeugt, wobei das Linsensubstrat (1) basierend auf den optischen Oberflächendaten und den Linsensubstratdaten selektiert wird, wobei das Linsensubstrat (1) eine optische Oberfläche hat, die wenigstens auf der konvexen Seite davon gebildet ist; und
- Einstellen einer Filmerzeugungsbedingung des photochromen Films und des harten Films unter Verwendung einer Steuereinheit (501), umfassend eine erste Filmerzeugungssteuervorrichtung (502) und eine zweite Filmerzeugungssteuervorrichtung (502), wobei die erste Filmerzeugungssteuervorrichtung (502) eine Filmerzeugungsbedingung des photochromen Films basierend auf den optischen Oberflächendaten, den Linsensubstratdaten und den Photochromdaten einstellt, und wobei die zweite Filmerzeugungssteuervorrichtung (503) eine Filmerzeugungsbedingung des harten Films basierend auf den Linsensubstratdaten einstellt,
wobei wenigstens eines von Farbe und Dichte in den Photochromdaten enthalten ist, und
wobei als die Filmerzeugungsbedingung des photochromen Films die erste Filmerzeugungssteuervorrichtung (502) wenigstens eines von dem Typ der photochromen Flüssigkeit entsprechend der Farbe des photochromen Films und die Dicke des geschichteten Films entsprechend der Dichte des photochromen Films selektiert und die selektierten Daten an die Photochromfilmerzeugungseinrichtung ausgibt.

2. Vorrichtung (500) zur Herstellung einer photochromen Linse, umfassend:
eine Datenspeichereinheit (510), in die Oberflächenbehandlungsdaten eingegeben werden, wobei die Oberflächenbehandlungsdaten umfassen: optische Oberflächendaten, die sich auf optische Oberflächen einer herzustellenden Linse beziehen, Linsensubstratdaten, die sich auf ein Linsensubstratmaterial beziehen, und Photochromdaten, die sich wenigstens auf einen photochromen Film beziehen;
eine Oberflächenbehandlungseinheit (520), umfassend eine Photochromfilmerzeugungseinrichtung und eine Hartfilmerzeugungseinrichtung, wobei die Hartfilmerzeugungseinrichtung dazu ausgelegt ist, einen harten Film zu erzeugen, und die Photochromfilmerzeugungseinrichtung dazu ausgelegt ist, basierend auf den Photochromdaten einen photochromen Film auf einem Linsensubstrat (1) zu erzeugen, wobei das Linsensubstrat (1) basierend auf den optischen Oberflächendaten und den Linsensubstratdaten selektiert ist, wobei das Linsensubstrat (1) eine optische Oberfläche hat, die wenigstens auf der konvexen Seite davon gebildet ist; und
eine Steuereinheit (501), umfassend eine erste Filmerzeugungssteuervorrichtung (502) und eine zweite Filmerzeugungssteuervorrichtung (503), wobei die erste Filmerzeugungssteuervorrichtung (502) dazu ausgelegt ist, eine Filmerzeugungsbedingung des photochromen Films basierend auf den optischen Oberflächendaten, den Linsensubstratdaten und den Photochromdaten einzustellen, und wobei die zweite Filmerzeugungssteuervorrichtung (503) dazu ausgelegt ist, eine Filmerzeugungsbedingung des harten Films basierend auf den Linsensubstratdaten einzustellen,
wobei wenigstens eines von Farbe und Dichte in den Photochromdaten enthalten ist, und
wobei als die Filmerzeugungsbedingung des photochromen Films die erste Filmerzeugungssteuervorrichtung (502) wenigstens eines von dem Typ der photochromen Flüssigkeit entsprechend der Farbe des photochromen Films und die Dicke des geschichteten Films entsprechend der Dichte des photochromen Films selektiert und die selektierten Daten an die Photochromfilmerzeugungseinrichtung ausgibt.

3. Vorrichtung (500) zur Herstellung einer photochromen Linse nach Anspruch 2,
wobei die Photochromfilmerzeugungseinrichtung einen drehbaren Rahmen umfasst, der dazu ausgelegt ist, das Linsensubstrat (1) mit einer nach oben gerichteten zu beschichtenden Oberfläche (2) zu montieren, die eine optische Oberfläche ist, auf der der photochrome Film erzeugt werden soll, und eine Tropfeinrichtung, die dazu ausgelegt ist, eine photochrome Flüssigkeit von einer Düse auf die zu beschichtende Oberfläche (2) zu tropfen,
wobei die optischen Oberflächendaten Krümmungsdaten enthalten, die sich auf die Krümmung der gekrümmten Oberfläche der optischen Oberfläche beziehen, sowie Abmessungsdaten, die sich auf die äußere Abmessung der optischen Oberfläche beziehen, und
wobei die erste Filmerzeugungssteuervorrichtung (502) den Abstand zwischen der zu beschichtenden Oberfläche (2) und der Düse basierend auf den Krümmungsdaten steuert, und die Bewegungstrajektorie der Düse basierend auf den Abmessungsdaten steuert.

4. Vorrichtung (500) zur Herstellung einer photochromen Linse nach einem der Ansprüche 2 bis 3, ferner umfassend eine Optikoberflächeerzeugungseinheit (550), die dazu ausgelegt ist, eine konkavseitige optische Oberfläche des Linsensubstrats zu erzeugen,
wobei die optischen Oberflächendaten konkavseitige optische Oberflächenerzeugungsdaten enthalten, und
wobei die Steuereinheit (501) eine Optikoberflächeerzeugungssteuervorrichtung (542) der Optikoberflächeerzeugungseinheit (550) basierend auf den Linsensubstratdaten und den konkavseitigen Optikoberflächeerzeugungsdaten steuert.

5. Programm zur Herstellung einer photochromen Linse, umfassend Instruktionen zum Bewirken, dass die Vorrichtung nach Anspruch 2 das Verfahren nach Anspruch 1 ausführt.

6. Speichermedium, auf dem das Computerprogramm nach Anspruch 5 gespeichert ist.

7. System zur Herstellung einer photochromen Linse, das einen bestellerseitigen Computer (101) und einen herstellerseitigen Computer (201) hat, die miteinander durch eine Kommunikationsleitung (300) verbunden sind, und das dazu ausgelegt ist, eine photochrome Linse unter Verwendung einer Photochromfilmerzeugungsvorrichtung (202) und einer Hartfilmerzeugungsvorrichtung (203) herzustellen, die auf der Herstellerseite angeordnet sind und durch den herstellerseitigen Computer (201) gesteuert werden,
wobei der bestellerseitige Computer (101) dazu konfiguriert ist, die folgenden Daten an den herstellerseitigen Computer (201) durch die Kommunikationsleitung (300) zu übertragen: Linsensubstratdaten, die sich auf ein Substratmaterial der Linse beziehen, optische Oberflächendaten, die sich auf optische Oberflächen der Linse beziehen, Daten, die sich auf einen photochromen Film beziehen, und Daten, die sich auf einen harten Film beziehen,
wobei der herstellerseitige Computer (201) umfasst:
eine Linsensubstratselektionseinrichtung, die dazu ausgelegt ist, ein Linsensubstrat (1) mit einer geeigneten optischen Oberfläche, gebildet aus einem geeigneten Linsensubstratmaterial, basierend auf den Linsensubstratdaten und den optischen Oberflächendaten zu selektieren, die von dem bestellerseitigen Computer empfangen werden;
eine Photochromfilmerzeugungsdatenselektionseinrichtung, die dazu ausgelegt ist, wenigstens Erzeugungsdaten des photochromen Films basierend auf den Daten zu selektieren, die sich auf den photochromen Film beziehen, und die selektierten Daten an die Photochromfilmerzeugungsvorrichtung (202) auszugeben; und
eine Hartfilmerzeugungsdatenselektionseinrichtung, die dazu ausgelegt ist, wenigstens Erzeugungsdaten des harten Films basierend auf den Daten zu selektieren, die sich auf den harten Film beziehen, und die selektierten Daten an die Hartfilmerzeugungsvorrichtung (203) auszugeben;
wobei die Photochromfilmerzeugungsvorrichtung (202) dazu konfiguriert ist, den photochromen Film auf dem Linsensubstrat (1) basierend auf den Daten zu erzeugen, die sich auf den photochromen Film beziehen, die von dem herstellerseitigen Computer (201) eingegeben werden, und
wobei die Hartfilmerzeugungsvorrichtung (203) dazu konfiguriert ist, den harten Film auf dem Linsensubstrat (1) basierend auf den Daten zu erzeugen, die sich auf den harten Film beziehen, die von dem herstellerseitigen Computer (201) eingegeben werden,
wobei wenigstens eines von Farbe und Dichte in den Daten enthalten ist, die sich auf den photochromen Film beziehen, und
wobei die Photochromfilmerzeugungsdatenselektionseinrichtung des herstellerseitigen Computers (201) dazu konfiguriert ist, als die Erzeugungsdaten des photochromen Films wenigstens eines von dem Typ von photochromer Flüssigkeit entsprechend der Farbe des photochromen Films und der Dicke des geschichteten Films entsprechend der Dichte des photochromen Films zu selektieren, und die selektierten Daten an die Photochromfilmerzeugungsvorrichtung (202) auszugeben.

8. System zur Herstellung einer photochromen Linse nach Anspruch 7, ferner umfassend eine Optikoberflächenerzeugungsvorrichtung, die dazu ausgelegt ist, eine optische Oberfläche auf der Oberfläche des Linsensubstrats (1) zu erzeugen, die von der Oberfläche verschieden ist, auf der der photochrome Film gebildet ist,
wobei der herstellerseitige Computer (201) ferner eine Optikoberflächenerzeugungsdatenselektionseinrichtung umfasst, die dazu ausgewählt ist, Optikoberflächenerzeugungsdaten von den Optikoberflächendaten zu selektieren und die selektierten Daten an die Optikoberflächenerzeugungsvorrichtung (204) auszugeben.

9. System zur Herstellung einer photochromen Linse nach einem der Ansprüche 7 bis 8, ferner umfassend eine Linsensubstratspeichervorrichtung (221), die dazu ausgelegt ist, eine Mehrzahl von Typen von Linsensubstraten (1) zu speichern,
wobei die Linsensubstratselektionseinrichtung des herstellerseitigen Computers (201) Daten, die sich auf den Typ des selektierten Linsensubstrats (1) beziehen, an die Linsensubstratspeichervorrichtung (221) ausgibt, und
wobei die Linsensubstratspeichervorrichtung (221) eine Transfereinrichtung aufweist, die dazu ausgelegt ist, das Linsensubstrat zu selektieren, das zu den Daten passt, die sich auf den Typ des Linsensubstrats beziehen, und das selektierte Linsensubstrat (1) zu der Photochromfilmerzeugungsvorrichtung (202) zu transferieren.

## Revendications

1. Un procédé de fabrication d'une lentille photochromique en utilisant un dispositif (500) de fabrication de lentille photochromique, le procédé comprenant :
- le fait d'entrer des données de traitement de surface dans une unité (510) de stockage de données, les données de traitement de surface comprenant : des données de surface optique liées aux surfaces optiques d'une lentille à fabriquer, des données de substrat de lentille liées au matériau de substrat de lentille, et des données photochromiques au moins en relation à un film photochromique ;
- le fait de former un film dur et un film photochromique sur un substrat de lentille en utilisant une unité (520) de traitement de surface comprenant un moyen de formation de film photochromique et un moyen de formation de film dur, le moyen de formation de film dur formant un film dur, et le moyen de formation de film photochromique formant, sur la base des données photochromiques, un film photochromique sur un substrat de lentille (1), le substrat de lentille (1) étant sélectionné sur la base des données de surface optique et des données de substrat de lentille, le substrat de lentille (1) ayant une surface optique formée sur au moins son côté convexe ; et
- le fait de régler une condition de formation de film du film photochromique et du film dur en utilisant une unité de commande (501) comprenant un premier dispositif (502) de commande de formation de film et un deuxième dispositif (503) de commande de formation de film, le premier dispositif (502) de commande de formation de film établissant une condition de formation de film du film photochromique sur la base des données de surface optique, des données de substrat de lentille et des données photochromiques, et le deuxième dispositif (503) de commande de formation de film établissant une condition de formation de film du film dur sur la base des données du substrat de la lentille,
au moins la couleur et la densité étant incluses dans les données photochromiques, et
en tant que condition de formation de film du film photochromique, le premier dispositif (502) de commande de formation de film sélectionnant au moins l'un parmi le type de liquide photochromique qui correspond à la couleur du film photochromique et l'épaisseur du film revêtu qui correspond à la densité du film photochromique, et délivrant les données sélectionnées au moyen de formation de film photochromique.

2. Un dispositif (500) de fabrication de verre photochromique comprenant :
une unité (510) de stockage de données dans laquelle des données de traitement de surface sont entrées, les données de traitement de surface comprenant : des données de surface optique liées aux surfaces optiques d'une lentille à fabriquer, des données de substrat de lentille liées au matériau de substrat de lentille, et des données photochromiques au moins liées à un film photochromique ;
une unité (520) de traitement de surface comprenant un moyen de formation de film photochromique et un moyen de formation de film dur, le moyen de formation de film dur étant adapté pour former un film dur, et le moyen de formation de film photochromique étant adapté pour former, sur la base des données photochromiques, un film photochromique sur un substrat de lentille (1), le substrat de lentille (1) étant sélectionné sur la base des données de surface optique et des données de substrat de lentille, le substrat de lentille (1) ayant une surface optique formée sur au moins son côté convexe ; et
une unité de commande (501) comprenant un premier dispositif (502) de commande de formation de film et un deuxième dispositif (503) de commande de formation de film, le premier dispositif (502) de commande de formation de film étant adapté pour régler une condition de formation de film du film photochromique basée sur les données de surface optique, les données de substrat de lentille et les données photochromiques, et le deuxième dispositif (503) de commande de formation de film étant adapté pour régler une condition de formation de film du film dur sur la base des données de substrat de lentille,
au moins la couleur et la densité étant incluses dans les données photochromiques, et
en tant que condition de formation de film du film photochromique, le premier dispositif (502) de commande de formation de film sélectionnant au moins l'un parmi le type de liquide photochromique correspondant à la couleur du film photochromique et l'épaisseur du film revêtu correspondant à la densité du film photochromique, et émet les données sélectionnées vers les moyens de formation de film photochromique.

3. Le dispositif (500) de fabrication de verre photochromique selon la revendication 2,
dans lequel les moyens de formation de film photochromique comprennent un cadre rotatif adapté pour recevoir par montage le substrat de lentille (1) avec une surface à revêtir (2), qui est une surface optique sur laquelle le film photochromique doit être formé, tournée vers le haut, et un moyen de goutte adapté pour faire tomber un liquide photochromique d'une buse sur la surface à revêtir (2),
dans lequel les données de surface optique comprennent des données de courbe liées à la courbe de la surface incurvée de la surface optique, et des données de dimension liées à la dimension extérieure de la surface optique, et
dans lequel le premier dispositif (502) de commande de formation de film commande la distance entre la surface à revêtir (2) et la buse sur la base des données de courbe, et commande la trajectoire de mouvement de la buse sur la base des données de dimension.

4. Le dispositif (500) de fabrication de lentille photochromique selon l'une quelconque des revendications 2 à 3, comprenant en outre une unité (550) de formation de surface optique adaptée pour former une surface optique du côté concave du substrat de lentille,
dans lequel les données de surface optique comprennent des données de formation de surface optique côté concave, et
dans lequel l'unité de commande (501) comporte un dispositif de commande de formation de surface optique (542) de l'unité (550) de formation de surface optique sur la base des données de substrat de lentille et des données de formation de surface optique du côté concave.

5. Un programme de fabrication de lentilles photochromiques comprenant des instructions pour amener le dispositif selon la revendication 2 à mettre en oeuvre le procédé selon la revendication 1.

6. Un support d'enregistrement sur lequel est stocké le programme informatique selon la revendication 5.

7. Un système de fabrication de lentille photochromique ayant un ordinateur (101) côté commande et un ordinateur (201) côté fabricant connectés l'un à l'autre par une ligne de communication (300), et adapté pour fabriquer une lentille photochromique en utilisant un dispositif (202) de formation de film photochromique et un dispositif (203) de formation de film dur agencé côté fabricant et commandé par l'ordinateur (201) côté fabricant,
l'ordinateur (101) côté commande étant configuré pour transmettre les données suivantes à l'ordinateur (201) côté fabricant par l'intermédiaire de la ligne de communication (300) : des données de substrat de lentille liées au matériau de substrat de la lentille, des données de surface optique liées aux surfaces optiques de la lentille, des données relatives à un film photochromique, et des données relatives à un film dur,
l'ordinateur (201) côté fabricant comprenant :
un moyen de sélection de substrat de lentille adapté pour sélectionner un substrat de lentille (1) ayant une surface optique appropriée formée dans un matériau de substrat de lentille approprié sur la base des données de substrat de lentille et des données de surface optique reçues de l'ordinateur côté commande :
un moyen de sélection de données de formation de film photochromique adapté pour sélectionner au moins des données de formation du film photochromique sur la base des données relatives au film photochromique, et délivrer les données sélectionnées au dispositif (202) de formation de film photochromique ; et
un moyen de sélection de données de formation de film dur adapté pour sélectionner au moins des données de formation de film dur sur la base des données relatives au film dur, et d'émission les données sélectionnées vers le dispositif (203) de formation de film dur ;
le dispositif (202) de formation de film photochromique étant configuré pour former le film photochromique sur le substrat de lentille (1), sur la base des données relatives à l'entrée de film photochromique depuis l'ordinateur (201) côté fabricant, et
le dispositif (203) de formation de film dur étant configuré pour former le film dur sur le substrat de lentille (1) sur la base des données relatives à l'entrée de film dur provenant de l'ordinateur (201) côté fabricant,
au moins la couleur et la densité étant incluses dans les données relatives au film photochromique, et
les moyens de sélection de données de formation de film photochromique de l'ordinateur (201) côté fabricant étant configurés pour sélectionner, en tant que données de formation du film photochromique, au moins l'un parmi le type de liquide photochromique correspondant à la couleur du film photochromique et l'épaisseur de film revêtu correspondant à la densité du film photochromique, et pour délivrer les données sélectionnées au dispositif (202) de formation de film photochromique.

8. Le système de fabrication de lentille photochromique selon la revendication 7, comprenant en outre un dispositif de formation de surface optique adapté pour former une surface optique sur la surface du substrat de lentille (1) autre que la surface sur laquelle est formé le film photochromique,
l'ordinateur (201) côté fabricant comprenant en outre un moyen de sélection de données de formation de surface optique adapté pour sélectionner des données de formation de surface optique à partir des données de surface optique, et pour délivrer les données sélectionnées au dispositif (204) de formation de surface optique.

9. Le système de fabrication de lentilles photochromiques selon l'une quelconque des revendications 7 à 8, comprenant en outre un dispositif (221) de stockage de substrat de lentille adapté pour stocker une pluralité de types de substrats (1) de lentille,
le moyen de sélection de substrat de lentille de l'ordinateur (201) côté fabricant émettant des données relatives au type de substrat de lentille sélectionné (1) vers le dispositif (221) de stockage de substrat de lentille, et
le dispositif (221) de stockage de substrat de lentille ayant un moyen de transfert adapté pour sélectionner le substrat de lentille correspondant aux données relatives au type de substrat de lentille, et transférer le substrat de lentille (1) sélectionné vers le dispositif (202) de formation de film photochromique.
